# EUROPEAN PATENT APPLICATION

(11) **EP 3 480 031 A1**
(43) Date of publication of application: **08.05.2019**
(21) Application number: 17199885.9
(22) Date of filing: 03.11.2017
(51) Int. Cl.: B60C 1/00, C08C 19/20, C08C 19/22, C08C 19/25, C08C 19/44, C08L 9/00

(54) **POLYMER BLEND**

(71) Applicant: Trinseo Europe GmbH, 8810 Horgen (CH)
(72) Inventor: THIELE, Sven, 06120 Halle (DE); HAMANN, Evemarie, 06128 Halle (DE); RUEHMER, Thomas D., 06343 Mansfeld (DE); THIELEMANN, Dominique, 04279 Leipzig (DE); WOHLFAHRT, Malte, 04229 Leipzig (DE)
(74) Representative: Hoffmann Eitle

(57) **Abstract**

The present invention relates to a polymer blend comprising, (A) 65 to 96 percent by weight of a first polymer; (B) 4 to 35 percent by weight of a second polymer, wherein the second polymer is obtainable by (i) anionic polymerization in the presence of a polymerization initiator in an organic solvent, and (ii) modification of the polymer chain ends obtained in (i) by addition and reaction of at least one compound.

The present invention also relates to a polymer composition, comprising said polymer blend; to a method for the preparation of a crosslinked elastomeric polymer; to a crosslinked elastomeric polymer obtainable according to said method and to an article, comprising either said polymer composition or said crosslinked elastomeric polymer.

## Description

### TECHNICAL FIELD

The present invention relates to a polymer blend comprising,
(A) 65 to 96 percent by weight of a first polymer that is a diene polymer having a weight average molecular weight (Mw) of from 500.000 to 3.000.000 g/mol derived from butadiene monomers and, optionally, further conjugated diene monomers, wherein 85 % by weight or more of the butadiene monomers are incorporated into the polymer chains in the form of the cis isomer;
(B) 4 to 35 percent by weight of a second polymer having a weight average molecular weight (Mw) of 500 to 100.000 g/mol, wherein the second polymer is obtainable by
   (i) anionic polymerization in the presence of a polymerization initiator in an organic solvent of (i-1) at least one conjugated diene monomer, or (i-2) at least one conjugated diene monomer and one or more α-olefin monomer(s), or (i-3) at least one or more α-olefin monomer(s), and
   (ii) modification of the polymer chain ends obtained in (i) by addition and reaction of at least one compound represented by any of formula (1), formula (3), or formula (11) to (18), as defined below,
wherein the amounts of the first polymer (A) and the second polymer (B) are based on the total weight of the first and the second polymers (A) and (B).

The present invention also relates to a polymer composition, comprising said polymer blend. In another embodiment, the present invention relates to a method for the preparation of a crosslinked elastomeric polymer, said method comprising
(1) Providing the polymer blend according to the invention or the polymer composition according to the invention;
(2) Adding one or more filler(s) and optionally one or more silane coupling agent(s); and compounding said mixture; and
(3) Adding one or more vulcanizing agent(s) and optionally one or more vulcanizing accelerator(s) to the mixture of step (2); and cross-linking said mixture.

Moreover, the present invention relates to a crosslinked elastomeric polymer obtainable according to said method and an article, comprising either said polymer composition or said crosslinked elastomeric polymer. In addition, use of said polymer blend, said polymer composition or said crosslinked elastomeric polymer for the production of a tire, a tire tread or a tire side wall as well as a polymer kit, comprising said polymer blend or said polymer composition, are described.

### BACKGROUND ART

In recent years, there has been an increasing demand for providing polymer compositions for the production of tires for the automobile industry which allows an improvement of the performance of the tire. Particularly, environmental aspects, i.e. production of the fuel consumption and/or carbon dioxide emission by reducing the rolling resistance of the tire, and safety aspects, i.e. improving the handling stability by increasing the tire's grip performance and abrasion resistance, became important.

A typical rubber formulation for the manufacturing of a tire includes an aromatic vinyl-conjugated diene copolymer of high molecular weight, such as a styrene butadiene rubber (SBR), which after compounding with several additives, such as a silica filler and a vulcanizing agent, and vulcanization

(crosslinking) leads to a tire product having a lower rolling resistance due to the high molecular weight of the SBR component used. Even though providing a tire having an enhanced (lower) rolling resistance is beneficial, the use of an aromatic vinyl-conjugated diene copolymer having a high molecular weight, and for this reason being associated with a high viscosity, results in less beneficial processability in the course of the further processing steps, i.e. compounding and vulcanization (crosslinking) of the corresponding polymer formulations.

Therefore, a high molecular weight aromatic vinyl-conjugated diene copolymer is typically extended with an extender oil of low molecular weight for reducing the copolymer's viscosity and guaranteeing a good mixing, incorporation and distribution of the copolymer in the subsequent compounding and/or crosslinking (vulcanization) steps of the rubber formulation. Typical extender oils (or softeners) are mineral oils and treated mineral oils, such as for example DAE (Distillate Aromatic Extract), TDAE (Treated Distillate Aromatic Extract), MES (Mild Extraction Solvate), RAE (Residual Aromatic Extract) and naphthenic oils. However, there are drawbacks associated with the extension of an aromatic vinyl-conjugated diene copolymer with a standard low molecular weight extender oil:
Since the molecular weight of the common extender oil is relatively low, e.g. about 450 g/mol (converted to polystyrene equivalents) for TDAE, the enhanced processability of the high molecular weight aromatic vinyl-conjugated diene copolymer during the subsequent compounding and vulcanization steps, as mentioned above, is accompanied by a significant increase of the amount of "volatile organic compounds" (herein abbreviated as VOC) in the corresponding final tire product. These VOC emissions become particularly relevant during use of the tire at elevated temperatures.

Another drawback is that the glass temperature and compatibility of these extender oils is more or less fixed and not variable. Thus, when formulating an aromatic vinyl-conjugated diene copolymer, compatibility and subsequent blooming of the extender oil on the vulcanizate surface during storage are relevant factors to be considered. In addition, performance and application field of the vulcanizate (i.e. the crosslinked rubber formulation after vulcanization), which typically depends on the glass transition temperature, may only be adjusted by variation of the specific composition of the aromatic vinyl-conjugated diene copolymer. However, an increase of the glass transition temperature of the aromatic vinyl-conjugated diene copolymer results in an improved grip performance and a higher rolling resistance, thereby increasing fuel consumption and carbon dioxide emission. On the other hand, reduction of the glass transition temperature of the aromatic vinyl-conjugated diene copolymer results in an improved rolling resistance and a lower fuel consumption of the resulting tire, but unfortunately also leads to a reduced wet grip performance.

Another drawback of using a common low molecular weight extender oil is that most of these extender oils are intensely colored, ranging from yellow to deep brown. Accordingly, an intense cleaning of the production plant has to be applied prior to changing polymer grades, particularly if a non-oil extended polymer grade is planned for the next production cycle. Such cleaning procedures are, however, time and cost consuming.

Moreover, the extension of a high molecular weight aromatic vinyl-conjugated diene copolymer with a common extender oil having a low molecular weight results in a less beneficial reduction of the mechanical properties, in particular the modulus, hardness versus handling performance (E' @ 60°C), increased abrasion loss and decreased rebound resilience at higher temperatures which correspond to a reduced rolling resistance.

Against this background, EP 3 059 256 A1 aims at providing alternative extender components as suitable replacement of or in addition to the common extender oils as applied by the prior art, thereby allowing the provision of cross-linked (vulcanized) polymer formulations, which are characterized by having an acceptable or improved processability, while the content of VOC emissions is reduced and a better balance of the dynamic properties of the crosslinked polymer formulations and the reinforcement is provided, such as a low hysteresis loss, as represented by a low heat build-up, high rebound at higher temperatures and a low tan δ at 60°C, and a higher reinforcement, as represented by higher moduli especially at 300% elongation and high abrasion resistance in the resulting tire products. Notwithstanding the improvement discussed in EP 3 059 256 A1, there was still room for further developments with regard to the rolling resistance (measured as HBU, rebound resilience at 60°C and tan delta @60°C); and abrasion resistance (measured as DIN abrasion) properties, when compared with corresponding TDAE oil extended cured rubber formulations. Beyond the above, further improvement was desirable as regards the stiffness at low temperature (E' measured at -25°C), and ice grip properties (measures at tan delta @-10°C). In addition, it was still desirable to enable the tire manufactures to have more flexibility during vulcanization, i.e. in terms of a broader processing window (expressed as scorch time (ts2)).

### Summary of the invention

1. In a first aspect, the present invention therefore relates to a polymer blend comprising
   (A) 65 to 96 percent by weight of a first polymer, preferably having a molecular weight distribution (Mw/Mn) of less than 3, wherein the first polymer is a diene polymer having a weight average molecular weight (Mw) of from 500.000 to 3.000.000 g/mol derived from butadiene monomers and, optionally, further conjugated diene monomers, wherein 85 % by weight or more of the butadiene monomers are incorporated into the polymer chains in the form of the cis isomer;
   (B) 4 to 35 percent by weight of a second polymer having a weight average molecular weight (Mw) of 500 to 100.000 g/mol, wherein the second polymer is obtainable by
      (i) anionic polymerization in the presence of a polymerization initiator in an organic solvent of (i-1) at least one conjugated diene monomer, or (i-2) at least one conjugated diene monomer and one or more α-olefin monomer(s), or (i-3) at least one or more α-olefin monomer(s), and
      (ii) modification of the polymer chain ends obtained in (i) by addition and reaction of at least one compound represented by any of formula (1), formula (3), or formula (11) to (18), as defined below,
      wherein the amounts of the first polymer (A) and the second polymer (B) are based on the total weight of the first and the second polymers (A) and (B):

      (R***O)_{X}(R**)_{y}Si-A-S-SiR**₃ formula (1),

      wherein each of R** is independently selected from C₁-C₁₆ alkyl or C₇-C₁₆ alkylaryl; R*** is independently selected from C₁-C₄ alkyl; A is selected from C₆-C₁₈ aryl, C₇-C₅₀ alkylaryl, C₁-C₅₀ alkyl and C₂-C₅₀ dialkylether; and optionally R**, R***, or A may independently be substituted with one or more groups, selected from C₁-C₄ alkyl, C₁-C₄ alkoxy, C₆-C₁₂ aryl, C₇-C₁₆ alkylaryl, di(C₁-C₇ hydrocarbyl)amino, bis(tri(C₁-C₁₂ alkyl) silyl)amino, tris(C₁-C₇ hydrocarbyl)silyl and C₁-C₁₂ thioalkyl; x is an integer selected from 1, 2 and 3; y is an integer selected from 0, 1 and 2; provided that x + y = 3;

      (R_{I}O)ₓ₁, (R_{II})_{y1},Si-R_{IV}-S-E formula (3),

      wherein R_{I} and R_{II} are independently selected from C₁-C₈ alkyl; xl' is an integer selected from 1, 2 and 3; y1' is an integer selected from 0, 1 and 2; R_{IV} is selected from C₁-C₈ alkyl; and E is R_{V} or of formula (3a): 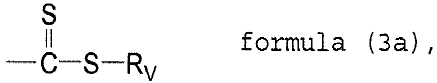 wherein R_{V} is C₁-C₆ alkyl, C₆-C₁₂ aryl, C₇-C₁₆ alkylaryl, or C₇-C₁₆ arylalkyl; 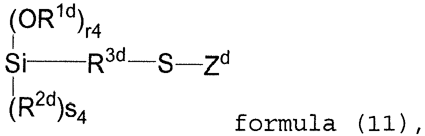 wherein each R^{1d} is independently selected from (C₁-C₄) alkyl; each R^{2d} is independently selected from (C₁-C₁₆) alkyl, (C₆-C₁₈) aryl and (C₇-C₁₈) aralkyl; R^{3d} is independently selected from divalent (C₁-C₁₆) alkyl, divalent (C₆-C₁₈) aryl, divalent (C₇-C₁₈) aralkyl and -R^{4d}-O-R^{5d}-, wherein R^{4d} and R^{5d} are independently selected from divalent (C₁-C₆) alkyl; and Z^{d} is independently selected from (C₁-C₁₆) alkyl, (C₆-C₁₈) aryl, (C₇-C₁₈) aralkyl, (C=S)-S-R^{6d}, wherein R^{6d} is selected from (C₁-C₁₆) alkyl, (C₆-C₁₈) aryl and (C₇-C₁₈) aralkyl, and -M^{1d}(R^{7d})_{c4}(R^{8d})_{d4}, wherein M^{1d} is silicon or tin, each R^{7d} is independently selected from (C₁-C₁₆) alkyl, (C₆-C₁₈) aryl and (C₇-C₁₈) aralkyl; each R^{8d} is independently selected from -S-R^{3d}-Si(OR^{1d})ᵣ₄(R^{2d})ₛ₄, wherein R^{1d}, R^{2d} and R^{3d} are as defined above, r₄ is an integer independently selected from 1, 2 and 3 and s₄ is an integer independently selected from 0, 1 and 2, with r₄ + s₄ = 3; c₄ is an integer independently selected from 2 and 3; d₄ is an integer independently selected from 0 and 1; and c₄ + d₄ = 3; 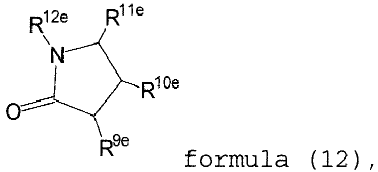 wherein R^{9e}, R^{10e}, R^{11e} and R^{12e} are independently selected from hydrogen, (C₁-C₁₆) alkyl, (C₆-C₁₆) aryl and (C₇-C₁₆) aralkyl, preferably N-methyl-pyrrolidon; 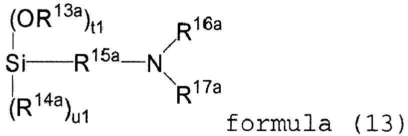 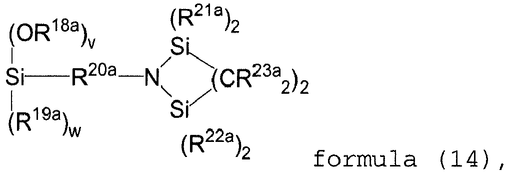 wherein each R^{13a} and R^{18a} are independently selected from (C₁-C₄) alkyl; R^{14a} and R^{19a} are independently selected from (C₁-C₁₆) alkyl; R^{15a} and R^{20a} are independently selected from divalent (C₁-C₁₆) alkyl, divalent (C₆-C₁₈) aryl, divalent (C₇-C₁₈) aralkyl and -R^{24a}-O-R^{25a}-, wherein R^{24a} and R^{25a} are independently selected from divalent (C₁-C₆) alkyl; R^{16a} and R^{17a} are independently selected from (C₁-C₁₆) alkyl and-SiR^{26a}R^{27a}R^{28a}, wherein R^{26a}, R^{27a} and R^{28a} are independently selected from (C₁-C₁₆) alkyl, (C₆-C₁₈) aryl and (C₇-C₁₈) alkylaryl, or R16a and R17a together form a ring system, the ring system optionally comprising additionally O, S or N as ring forming atoms, each of R16a and R17a being a divalent (C1-C16) alkylene group; each R^{21a} and R^{22a} is independently selected from (C₁-C₁₆) alkyl, (C₆-C₁₈) aryl and (C₇-C₁₈) alkylaryl; each R^{23a} is independently selected from hydrogen and (C₁-C₆) alkyl; t₁ and v are integers independently selected from 1, 2 and 3; u₁ and w are integers independently selected from 0, 1 and 2; t₁ + u₁ = 3; and v + w = 3; 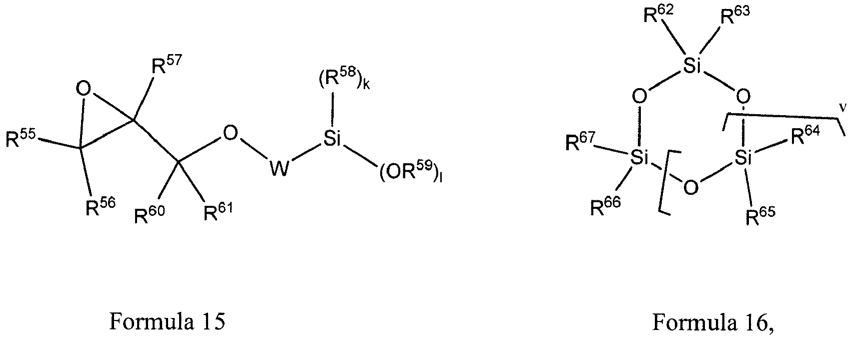 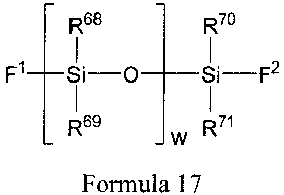
      wherein R⁵⁵, R⁵⁶, R⁵⁷, R⁵⁸, R⁶⁰, R⁶¹, R⁶², R⁶³, R⁶⁴, R⁶⁵, R⁶⁶, R⁶⁷, R⁶⁸, R⁶⁹, R⁷⁰ and R⁷¹ are each independently selected from hydrogen, (C₁-C₁₆) alkyl, (C₆-C₁₆) aryl and (C₇-C₁₆) alkylaryl;
      R⁵⁹ is selected from (C₁-C₄) alkyl, (C₆-C₁₈) aryl and (C₇-C₁₈) alkylaryl;
      W is at least divalent and is selected from (C₆-C₁₈) aryl, (C₇-C₁₈) alkylaryl and (C₁-C₁₈) alkyl, wherein each group is optionally substituted with one or more groups selected from di(C₁-C₇ hydrocarbyl) amino, bis(tri(C₁-C₁₂ alkyl) silyl) amino, tris(C₁-C₇ hydrocarbyl) silyl, (C₇-C₁₈) alkylaryl and (C₆-C₁₈) aryl;
      k is selected from 0, 1 and 2; 1 is selected from 1, 2 and 3; k+l=3; and v is selected from 1 to 20;
      F¹ and F² are independently selected from hydrogen, hydroxy, chlorine, bromine, iodine, -SiR⁵²R⁵³R⁵⁴, wherein R⁵², R⁵³, R⁵⁴ are the same or different and are independently selected from C₁-C₁₆ alkyl or C₇-C₁₆ alkylaryl, vinyl, (C₆-C₁₆) aryl, (C₇-C₁₆) alkylaryl and (C₁-C₁₆) alkyl, wherein each hydrocarbyl group is optionally substituted with one or more groups selected from hydroxyl, di (C₁-C₇ hydrocarbyl)amino, bis(tri(C₁-C₁₂ alkyl)silyl)amino and an epoxy group and;
      (R⁸⁰O)y (R⁸¹)z Si Formula 18

      R⁸⁰ is independently selected from methyl, ethyl, iso-propyl, n-propyl, n-butyl, iso-butyl, or tert-butyl; R⁸¹ is independently selected from C₁-C₆ alkyl, C₆-C₁₂ aryl, or C₇-C₁₀ aralkyl; y is an integer independently selected from 2, 3 and 4; z is an integer independently selected from 0, 1 and 2; y + z = 4.

Preferred examples of compounds according to formulae 1, 3, 11, 13, 14, 15 and 18 are defined in claim 6.

The first polymer (A) preferably is a polymer that is obtainable by a process comprising the following steps in this order:
(I) Polymerizing one or more diene monomers in the presence of a catalyst composition to give a reaction mixture; wherein the catalyst composition comprises one or more of a carboxylate, an alkyl phosphate, an alkyl phosphite, an alcoholate, an amide and a hydrocarbyl compound of a rare earth element having an atomic number of 57 to 71 in the periodic table, and at least one activator compound, or a reaction product of the at least one activator compound and the carboxylate, alkyl phosphate, alkyl phosphite, alcoholate, amide and/or hydrocarbyl compound of the rare earth element;
II) Optionally adding to the reaction mixture one or more alkoxysilane compounds selected from the compounds represented by the following formulae (A1), (A2), (A3), (A4) and (A5):

   ((R¹O)_{q}(R²)ᵣSi)ₛ (A1)

   wherein in formula (A1): Si is silicon and O is oxygen;
   s is an integer selected from 1 and 2;
   with the proviso that if s is 1, then q is an integer selected from 2, 3 and 4; r is an integer selected from 0, 1 and 2; and q + r = 4;
   and if s is 2, then q is an integer selected from 1, 2 and 3; r is an integer selected from 0, 1 and 2; and q + r = 3;

   ((R³O)ₜ(R⁴)ᵤSi)₂O (A2)

   wherein in formula (A2): Si and O are as defined above;
   t is an integer selected from 1, 2 and 3;
   u is an integer selected from 0, 1 and 2;
   and t + u = 3;

   (R⁵O)_{w}(R⁶)ₓSi-R⁷-S-SiR⁸₃ (A3)

   wherein in formula (A3): Si and O are as defined above, and S is sulfur;
   w is an integer selected from 2 and 3;
   x is an integer selected from 0 and 1;
   and w + x = 3;

   (R⁹O)_{y}(R¹⁰)_{z}Si-R¹¹-N(SiR¹²₃)₂ (A4)

   wherein in formula (A4): Si and O are as defined above, and N is nitrogen;
   y is an integer selected from 2 and 3;
   z is an integer selected from 0 and 1;
   and y + z = 3;

   (Si(OR¹³)₃)₂(Si(OR¹⁴)₂)ₚ (A5)

   wherein in formula (A5): Si and O are as defined above;
   p is an integer selected from 1 to 10;
   and wherein R1, R2, R3, R4, R5, R6, R8, R9, R10, R12, R13 and R14 in the above formulae (A1) to (A5) independently are selected from: (C6-C21) aryl, (C7-C22) alkylaryl and (C1-C16) alkyl; and R7 and R11 in formulae (A3) and (A4) independently are a divalent (C6-C21) aryl group, a divalent (C7-C22) alkylaryl group, or a divalent (C1-C16) alkylen group;
III) optionally, adding S₂Cl₂, SCl₂, SOCl₂, S₂Br₂, SOBr₂ or a mixture thereof to the reaction mixture; and
IV) optionally adding a protic agent to the reaction mixture so as to deactivate the catalyst.

The polymerization initiator used in step (i) for the preparation of the second polymer (B) may be selected from the group, consisting of n-BuLi, sec-BuLi, tert-BuLi, 1,3-bis(3-lithioprop-1-en-2-yl)benzene, a compound represented by formula (6) to formula (10), as defined in claim 4, or Lewis base adducts thereof, and/or mixtures thereof.

The component (B), i.e. the second polymer, may be an elastomeric polymer, preferably a styrene-butadiene-polymer or a butadiene-polymer.

As used herein, the at least one conjugated diene monomer may be selected from 1,3-butadiene, 2-alkyl-1,3-butadiene, 2-methyl-1,3-butadiene, 2,3-dimethyl-1,3-butadiene, 1,3-pentadiene, 2,4-hexadiene, 1,3-hexadiene, 1,3-heptadiene, 1,3-octadiene, 2-methyl-2,4-pentadiene, cyclopentadiene, 2,4-hexadiene and/or 1,3-cyclooctadiene. The preferred conjugated diene monomers are butadiene and/or isoprene.

As used herein, the at least one α-olefin monomer may be selected from styrene, 2-methylstyrene, 3-methylstyrene, α-methylstyrene, 2,4-dimethylsytrene, 2,4,6-trimethylstyrene, α-methylstyrene, stilbene, 2,4-diisopropylstyrene,4-tert-butylstyrene, vinyl benzyl dimethylamine, (4-vinylbenzyl)dimethyl aminoethyl ether, N,N-dimethylaminoethyl styrene, tert-butoxystyrene, vinylpyridine, divinylbenzene, a vinylsilane compound of formula (4) or formula (5), as defined in claim 5, and/or mixtures thereof. The preferred α-olefin monomers are styrene, divinylbenzene and the vinylsilane compounds of formula (4) and (5).

In a second aspect, the present invention provides a polymer composition, comprising the polymer blend of the first aspect of the invention.

The polymer composition of the invention may also comprise one or more filler(s) and optionally one or more vulcanizing agent(s) (or crosslinking agent(s)). In addition, the polymer composition of the invention may also include up to 10 percent by weight of one or more extender oil(s), based on the total weight of the polymer composition.

In a third aspect, the present invention provides a method for the preparation of a crosslinked elastomeric polymer, said method comprising the following steps: (1) Providing the polymer blend of the first aspect of the invention or the polymer composition of the second aspect of the invention; (2) Adding one or more filler(s) and optionally one or more silane coupling agent(s); and compounding said mixture; and (3) Adding one or more vulcanizing agent(s) and optionally one or more vulcanizing accelerator(s) to the mixture of step (2); and cross-linking said mixture.

In a fourth aspect, the present invention provides a crosslinked elastomeric polymer obtainable according the third aspect of the invention.

In a fifth aspect, the present invention provides an article, comprising the polymer composition according to the second aspect of the present invention or the crosslinked elastomeric polymer according to the fourth aspect of the invention.

Said article according to the invention may be a tire, a tire tread, a tire side wall, a conveyer belt, a seal or a hose.

In a sixth aspect, the present invention relates to the use of (I.1) the polymer blend according to the first aspect of the present invention, (I.2) the polymer composition according to the second aspect of the present invention, or (I.3) the crosslinked elastomeric polymer according to the fourth aspect of the present invention for the production of a tire tread or a tire side wall.

In a seventh aspect, the present invention relates to a polymer kit, comprising (II.1) the polymer blend according to the first aspect of the present invention, or (II.2) the polymer composition according to the second aspect of the present invention.

### DETAILED DESCRIPTION OF THE INVENTION

### THE POLYMER BLEND

The polymer blend according to the first aspect of the invention comprises the following components:
Component (A) - a first high cis elastomeric polymer with high molecular weight.

In a first embodiment, component (A) of the polymer blend as defined in claim 1 is a first elastomeric polymer having a high molecular weight, wherein 85 percent by weight or more of the butadiene monomers are incorporated into the polymer chains in the form of the cis isomer.

Suitable monomers and conditions for the preparation of the first polymer (herein after also referred to as high cis polymer) are described in more detail herein below.

### Conjugated diene monomer

Representative conjugated diene monomers include, but are not limited to 1,3-butadiene, 2-alkyl-1,3-butadiene, 2-methyl-1,3-butadiene, 2,3-dimethyl-1,3-butadiene, 1,3-pentadiene, 2,4-hexadiene, 1,3-hexadiene, 1,3-heptadiene, 1,3-octadiene, 2-methyl-2,4-pentadiene, cyclopentadiene, 2,4-hexadiene and/or 1,3-cyclooctadiene, preferably 1,3-butadiene, and/or 2-methyl-1,3-butadiene. Preferred conjugated diene monomers include, but are not limited to, 1,3-butadiene, isoprene and combinations thereof.

### Suitable ways to prepare polymer (A)

In a preferred embodiment, the first polymer is obtainable by a process comprising the following steps in this order:
(I) Polymerizing one or more diene monomers in the presence of a catalyst composition to give a reaction mixture; wherein the catalyst composition comprises one or more of a carboxylate, an alkyl phosphate, an alkyl phosphite, an alcoholate, an amide and a hydrocarbyl compound of a rare earth element having an atomic number of 57 to 71 in the periodic table, and at least one activator compound, or a reaction product of the at least one activator compound and the carboxylate, alkyl phosphate, alkyl phosphite, alcoholate, amide and/or hydrocarbyl compound of the rare earth element;
II) optionally adding to the reaction mixture one or more alkoxysilane compounds selected from the compounds represented by the following formulae (A1), (A2), (A3), (A4) and (A5):

   ((R¹O)_{q}(R²)ᵣSi)ₛ (A1)

   wherein in formula (A1): Si is silicon and O is oxygen;
   s is an integer selected from 1 and 2;
   with the proviso that if s is 1, then q is an integer selected from 2, 3 and 4; r is an integer selected from 0, 1 and 2; and q + r = 4;
   and if s is 2, then q is an integer selected from 1, 2 and 3; r is an integer selected from 0, 1 and 2; and q + r = 3;

   ((R³O)ₜ(R⁴)ᵤSi)₂O (A2)

   wherein in formula (A2): Si and O are as defined above;
   t is an integer selected from 1, 2 and 3;
   u is an integer selected from 0, 1 and 2;
   and t + u = 3;

   (R⁵O)_{w}(R⁶)ₓSi-R⁷-S-SiR⁸₃ (A3)

   wherein in formula (A3): Si and O are as defined above, and S is sulfur;
   w is an integer selected from 2 and 3;
   x is an integer selected from 0 and 1;
   and w + x = 3;

   (R⁹O)_{y}(R¹⁰)_{z}Si-R¹¹-N(SiR¹²₃)₂ (A4)

   wherein in formula (A4): Si and O are as defined above, and N is nitrogen;
   y is an integer selected from 2 and 3;
   z is an integer selected from 0 and 1;
   and y + z = 3;

   (Si(OR¹³)₃)₂(Si(OR¹⁴)₂)ₚ (A5)

   wherein in formula (A5): Si and O are as defined above;
   p is an integer selected from 1 to 10;
   and wherein R1, R2, R3, R4, R5, R6, R8, R9, R10, R12, R13 and R14 in the above formulae (A1) to (A5) independently are selected from: (C6-C21) aryl, (C7-C22) alkylaryl and (C1-C16) alkyl; and
   R7 and R11 in formulae (A3) and (A4) independently are a divalent (C6-C21) aryl group, a divalent (C7-C22) alkylaryl group, or a divalent (C1-C16) alkylen group;
III) optionally adding S₂Cl₂, SCl₂, SOCl₂, S₂Br₂, SOBr₂ or a mixture thereof to the reaction mixture; and
IV) optionally adding a protic agent to the reaction mixture so as to deactivate the catalyst.

The catalyst composition used in the process that can be employed for the preparation of the first polymer (A) may either comprise at least one compound of a rare earth element as well as an activator compound, wherein the at least one compound of the rare earth element (in the following also abbreviated as "rare earth element compound") is selected from carboxylates, alkyl phosphates, alkyl phosphites, alcoholates, amides and hydrocarbyls of a rare earth element having an atomic number of 57 to 71 in the periodic table. Or the catalyst composition may comprise a reaction product of the at least one activator compound and the at least one rare earth element compound.

The rare earth element in the rare earth element compound is preferably selected from neodymium, praseodymium, cerium, lanthanum, gadolinium and dysprosium or a combination thereof. In a more preferred embodiment, the rare earth element comprises neodymium.

The rare earth element compound can be selected from a wide variety of carboxylates, alkyl phosphates, alkyl phosphites, alcoholates, amides and hydrocarbyls. Preferred examples of carboxylates include octanoates (such as 2-ethyl-hexanoate), decanoates, naphtenates, versatate and neodecanoate. Preferred carboxylates include versatate and neodecanoate.

In a preferred embodiment, the rare earth element compound comprises neodymium versatate or neodymium neodecanoate, preferably neodymium (versatate)3 or neodymium (neodecanoate)3.

The activator compound of the catalyst composition as used in the present invention preferably comprises a Lewis acid. The Lewis acid can be chosen from a wide variety of Lewis acids, such as alkyl aluminum halides, alkyl chlorides, chlorosilanes and other metal chlorides. In a more preferred embodiment, the Lewis acid is an alkyl aluminum chloride or bromide selected from dialkyl aluminum chloride or bromide and alkyl aluminum dichloride or dibromide. Suitable examples of alkyl aluminum chlorides include diethyl aluminum chloride, ethyl aluminum sesquichloride, ethyl aluminum dichloride, as well as di-iso-butyl aluminum chloride, iso-butyl aluminum sesquichloride, iso-butyl aluminum dichloride, di-iso-propyl aluminum chloride, iso-propyl aluminum sesquichloride and iso-propyl aluminum dichloride. Examples of alkyl aluminum bromides include diethyl aluminum bromide, ethyl aluminum sesquibromide, ethyl aluminum dibromide, as well as di-iso-butyl aluminum bromide, iso-butyl aluminum sesquibromide, iso-butyl aluminum dibromide, di-iso-propyl aluminum bromide, iso-propyl aluminum sesquibromide and iso-propyl aluminum dibromide. In a particularly preferred embodiment, the Lewis acid is selected from diethyl aluminum chloride, ethyl aluminum sesquichloride, ethyl aluminum dichloride, iso-butyl aluminum chloride, iso-butyl aluminum sesquichloride, iso-butyl aluminum dichloride, di-iso-propyl aluminum chloride, iso-propyl aluminum sesquichloride and iso-propyl aluminum dichloride with diethyl aluminum chloride being particularly preferable.

Alkyl aluminum halides as activator compounds are typically used in an amount such that the ratio of the rare earth element compound / alkyl aluminum halide is of from 1:1 to 1:3 based on the molar amount of the rare earth element and the molar equivalents of halide. Preferably, this ratio is of from 1:2 to 1:3.

In a further preferred embodiment, the activator compound of the catalyst composition comprises one or more dialkyl aluminum hydrides according to general formula (A6) and at least one of the above Lewis acids:

R15₂AlH (A6)

wherein both groups R15 in formula (A6) are independently C1-10 alkyl groups. Preferably, each R15 is a C2-6 alkyl group, more preferably a C3-4 alkyl group. Particularly preferred examples of R15 are iso-propyl and isobutyl.

The dialkyl aluminum hydride according to formula (A6) is typically used in an amount such that the molar ratio of the dialkyl aluminum hydride / rare earth element compound is of from 3:1 to 30:1, preferably of from 5:1 to 15:1.

Further activating compounds that may be used as an alternative to or in addition to the above at least one activator comound are combinations of neutral optional Lewis acids, especially the combination of a trialkyl aluminum compound having from 1 to 4 carbons in each alkyl group with one or more C1 - 30 hydrocarbyl-substituted Group 13 Lewis acid compounds, especially halogenated tri(hydrocarbyl)boron or -aluminum compounds having from 1 to 20 carbons in each hydrocarbyl group, especially tris(pentafluorophenyl)borane or tris(pentafluorophenyl)alumane, further combinations of such neutral Lewis acid mixtures with a polymeric or oligomeric alumoxane, and combinations of a single neutral Lewis acid, especially tris(pentafluorophenyl)borane or tris(pentafluorophenyl)alumane, with a polymeric or oligomeric alumoxane. A benefit according to the present invention is the discovery that the most efficient catalyst activation using such a combination of tris(pentafluorophenyl)borane/ alumoxane mixture occurs at reduced levels of alumoxane. Preferred molar ratios of the metal complex:tris(pentafluorophenyl)borane:alumoxane are from 1:1:1 to 1:5:5, more preferably from 1:1:1.5 to 1:5:3. The surprising efficient use of lower levels of alumoxane with the present invention allows for the production of diene polymers with high catalytic efficiencies using less of the expensive alumoxane activator. Additionally, polymers with lower levels of aluminum residue, and hence greater clarity, are obtained. Suitable ion-forming activator compounds useful as activators in one embodiment of the present invention comprise a cation which is a acid capable of donating a proton, and a compatible, non-coordinating or poorly coordinating anion. As used herein, the term "non-coordinating" means an anion or substance which either does not coordinate to the metal containing precursor complex and the catalytic derivative derived therefrom, or which is only weakly coordinated to such complexes thereby remaining sufficiently labile to be displaced by a Lewis base such as olefin monomer in a manner such that the polymerization may proceed. A non-coordinating anion specifically refers to an anion which when functioning as a charge-balancing anion in a cationic metal complex does not transfer an anionic substituent or fragment thereof to said cation thereby forming neutral complexes. "Compatible anions" are anions which are not degraded to neutrality when the initially formed complex decomposes and are non-interfering with desired subsequent polymerization or other uses of the complex.

Preferred anions are those containing a single coordination complex comprising a charge-bearing metal or metalloid core which anion is capable of balancing the charge of the active catalyst species (the metal cation) which may be formed when the two components are combined. Also, said anion should be sufficiently labile to be displaced by olefinic, diolefinic and acetylenically unsaturated compounds or other neutral Lewis bases such as ethers or nitriles. Suitable metals include, but are not limited to, aluminum, gold and platinum. Suitable metalloids include, but are not limited to, boron, phosphorus, and silicon. Compounds containing anions which comprise coordination complexes containing a single metal or metalloid atom are, of course, well known and many, particularly such compounds containing a single boron atom in the anion portion, are available commercially.

Preferably such activators may be represented by the following general formula:

(L*-H)+dAd-

wherein:
L* is a neutral Lewis base;
(L*-H)+ is a Bronsted acid;
Ad- is a noncoordinating, compatible anion having a charge of d-, and
d is an integer from I to 3.

More preferably Ad- corresponds to the formula:

[M*Q4]-;

wherein:
M* is boron or aluminum in the +3 formal oxidation state; and
Q independently each occurrence is selected from hydride, dialkylamido, halide, hydrocarbyl, halohydrocarbyl, halocarbyl, hydrocarbyloxide, hydrocarbyloxy substituted-hydrocarbyl, organometal substituted- hydrocarbyl, organometalloid substituted-hydrocarbyl, halohydrocarbyloxy, halohydrocarbyloxy substituted hydrocarbyl, halocarbyl-substituted hydrocarbyl, and halo- substituted silylhydrocarbyl radicals (including perhalogenated hydrocarbyl-, perhalogenated hydrocarbyloxy- and perhalogenated silythydrocarbyl radicals), said Q having up to 20 carbon atoms with the proviso that in not more than one occurrence is Q halide. Examples of suitable hydrocarbyloxide Q groups are disclosed in U.S. Pat. No. 5,296,433.

In a more preferred embodiment, d is one, that is, the counterion has a single negative charge and is A-. Activating cocatalysts comprising boron which are particularly useful in the preparation of catalysts of this invention may be represented by the following general formula:

(L*-H)+ (BQ4)-;

wherein:
(L*-H)+ is as previously defined;
B is boron in a formal oxidation state of 3; and
Q is a hydrocarbyl-, hydrocarbyloxy-, fluorinated hydrocarbyl-, fluorinated hydrocarbyloxy-, or fluorinated silylhydrocarbyl- group of up to 20 nonhydrogen atoms, with the proviso that in not more than one occasion is Q hydrocarbyl.
Even more preferably, Q is each occurrence a fluorinated aryl group, especially, a pentafluorophenyl or nonafluorobiphenyl group. Preferred BQ4- anions are methyltris(pentafluorophenyl)borate, tetrakis(pentafluorophenyl)borate or tetrakis(nonafluorobiphenyl)borate.

Illustrative, but not limiting, examples of boron compounds which may be used as an activating cocatalyst in the preparation of the improved catalysts of this invention are trisubstituted ammonium salts such as: trimethylammonium tetraphenylborate, tri(n-butyl)ammonium tetraphenylborate, methyldioctadecylammonium tetraphenylborate, triethylammonium tetraphenylborate, tripropylammonium tetraphenylborate, tri(n-butyl)ammonium tetraphenylborate, methyltetradecyloctadecylammonium tetraphenylborate, N,N-dimethylanilinium tetraphenylborate, N,N-diethylanilinium tetraphenylborate, N,N,-2,4,6-pentamethylanilinium) tetraphenylborate, N,N-dimethyl anilinium bis(7,8-dicarbundecaborate) cobaltate (III), trimethylammonium tetrakis(pentafluorophenyl)borate, methyldi(tetradecyl)ammonium tetrakis(pentafluorophenyl) borate, methyldi(octadecyl)ammonium tetrakis(pentafluorophenyl) borate, triethylammonium tetrakis(pentafluorophenyl)borate, tripropylammonium tetrakis(pentafluorophenyl)borate, tri(n-butyl)ammonium tetrakis(pentafluorophenyl)borate, tri(sec-butyl)ammonium tetrakis(pentafluorophenyl)borate, N,N-dimethylanilinium tetrakis(pentafluorophenyl)borate, N,N-diethylanilinium tetrakis(pentafluorophenyl)borate, N,N,2,4,6-pentamethylanilinium) tetrakis(pentafluorophenyl)borate, trimethylammonium tetrakis(2,3,4,6-tetrafluorophenyl)borate, triethylammonium tetrakis(2,3,4,6-tetrafluorophenyl)borate, tripropylammonium tetrakis(2,3,4,6-tetrafluorophenyl)borate, tri(n-butyl)ammonium tetrakis(2,3,4,6-tetrafluorophenyl) borate, dimethyl(t-butyl) ammonium tetrakis(2,3,4,6-tetrafluorophenyl)borate, N,N-dimethylanilinium tetrakis(2,3,4,6-tetrafluorophenyl) borate, N,N-diethylanilinium tetrakis(2,3,4,6-tetrafluorophenyl) borate, and N,N,2,4,6-pentamethylanilinium) tetrakis-(2,3,4,6-tetrafluorophenyl)borate; dialkyl ammonium salts such as: di(octadecyl)ammonium tetrakis(pentafluorophenyl)borate, di(tetradecyl)ammonium tetrakis(pentafluorophenyl)borate, and dicyclohexylammonium tetrakis(pentafluorophenyl)borate; trisubstituted phosphonium salts such as: triphenylphosphonium tetrakis(pentafluorophenyl)borate, methyldi(octadecyl)phosphonium tetrakis(pentafluorophenyl) borate, and tris(2,6-dimethylphenyl)phosphonium tetrakis(pentafluorophenyl)borate.

Examples for tetrakis(pentafluorophenyl)borate salts are long chain alkyl mono- di- and trisubstituted ammonium complexes, especially C14-C20 alkyl ammonium complexes, especially methyldi(octadecyl) ammonium tetrakis (pentafluorophenyl)borate and methyldi(tetradecyl)ammonium tetrakis(pentafluorophenyl)borate, or mixtures including the same. Such mixtures include protonated ammonium cations derived from amines comprising two C14, C16 or C18 alkyl groups and one methyl group. Such amines are available from Witco Corp., under the trade name Kemamine™ T9701, and from Akzo-Nobel under the trade name Armeen™ M2HT.

Examples of the catalyst activators herein include the foregoing trihydrocarbylammonium-, especially, methylbis(tetradecyl)ammonium- or methylbis(octadecyl)ammonium- salts of:
bis(tris(pentafluorophenyl)borane)imidazolide,
bis(tris(pentafluorophenyl)borane)-2-undecylimidazolide,
bis(tris(pentafluorophenyl)borane)-2-heptadecylimidazolide,
bis(tris(pentafluorophenyl)borane)-4,5-
bis(undecyl)imidazolide, bis(tris(pentafluorophenyl)borane)-
4,5-bis(heptadecyl)imidazolide,
bis(tris(pentafluorophenyl)borane)imidazolinide,
bis(tris(pentafluorophenyl)borane)-2-undecylimidazolinide,
bis(tris(pentafluorophenyl)borane)-2-heptadecylimidazolinide,
bis(tris(pentafluorophenyl)borane)-4,5-
bis(undecyl)imidazolinide, bis(tris(pentafluorophenyl)borane)-
4,5-bis(heptadecyl)imidazolinide,
bis(tris(pentafluorophenyl)borane)-5,6-
dimethylbenzimidazolide, bis(tris(pentafluorophenyl)borane)-
5,6-bis(undecyl)benzimidazolide,
bis(tris(pentafluorophenyl)alumane)imidazolide,
bis(tris(pentafluorophenyl)alumane)-2-undecylimidazolide,
bis(tris(pentafluorophenyl)alumane)-2-heptadecylimidazolide,
bis(tris(pentafluorophenyl)alumane)-4,5-
bis(undecyl)imidazolide, bis(tris(pentafluorophenyl)alumane)-
4,5-bis(heptadecyl)imidazolide,
bis(tris(pentafluorophenyl)alumane)imidazolinide,
bis(tris(pentafluorophenyl)alumane)-2-undecylimidazolinide,
bis(tris(pentafluorophenyl)alumane)-2-heptadecylimidazolinide,
bis(tris(pentafluorophenyl)alumane)-4,5-
bis(undecyl)imidazolinide,
bis(tris(pentafluorophenyl)alumane)-4,5-
bis(heptadecyl)imidazolinide,
bis(tris(pentafluorophenyl)alumane)-5,6-
dimethylbenzimidazolide, and
bis(tris(pentafluorophenyl)alumane)-5,6-bis(undecyl)benzimidazolide. The foregoing activating cocatalysts have been previously taught with respect to different metal complexes in the following reference: EP 1 560 752 A1.

Another suitable ammonium salt, especially for use in heterogeneous catalyst compositions, is formed upon reaction of an organometal compound, especially a tri(C1-6 alkyl)aluminum compound with an ammonium salt of a hydroxyaryltris(fluoroaryl)borate compound. The resulting compound is an organometaloxyaryltris(fluoroaryl)borate compound which is generally insoluble in aliphatic liquids. Examples of suitable compounds include the reaction product of a tri(C1-6 alkyl)aluminum compound with the ammonium salt of hydroxyaryltris(aryl)borate. Suitable hydroxyaryltris(aryl)borates include the ammonium salts, especially the foregoing long chain alkyl ammonium salts of:
(4-dimethylaluminumoxyphenyl)tris(pentafluorophenyl) borate,
(4-dimethylaluminumoxy-3,5-di(trimethylsilyl)phenyl)
tris(pentafluorophenyl)borate, (4- dimethylaluminumoxy-3,5-
di(t-butyl)phenyl) tris(pentafluorophenyl)borate, (4-dimethylaluminumoxybenzyl) tris(pentafluorophenyl) borate, (4-dimethylaluminumoxy-3-methylphenyl) tris(pentafluorophenyl)borate, (4-dimethylaluminumoxy-tetrafluorophenyl) tris(pentafluorophenyl)borate,
(5-dimethylaluminumoxy-2-naphthyl) tris(pentafluorophenyl)borate,
4-(4-dimethylaluminumoxyphenyl) phenyltris(pentafluorophenyl)borate,
4-(2-(4-(dimethylaluminumoxyphenyl)propane-2-yl)phenyloxy) tris(pentafluorophenyl)borate,
(4-diethylaluminumoxyphenyl) tris(pentafluorophenyl) borate,
(4-diethylaluminumoxy-3,5-di(trimethylsilyl)phenyl) tris(pentafluorophenyl)borate, (4-diethylaluminumoxy-3,5-di(t-butyl)phenyl) tris(pentafluorophenyl)borate,
(4-diethylaluminumoxybenzyl) tris(pentafluorophenyl)borate,
(4-diethylaluminumoxy-3-methyIphenyl) tris(pentafluorophenyl)borate,
(4-diethyIaluminumoxy-tetrafluorophenyl) tris(pentafluorophenyl)borate, (5-diethylaluminumoxy-2-
naphthyl) tris(pentafluorophenyl) borate,
4-(4-diethylaluminumoxyphenyl)phenyl tris(pentafluorophenyl)borate,
4-(2-(4-(diethylaluminumoxyphenyl)propane-2-yl)phenyloxy) tris(pentafluorophenyl)borate,
(4-diisopropylaluminumoxyphenyl) tris(pentafluorophenyl)borate, (4-diisopropylaluminumoxy-3,5-di(trimethylsilyl)phenyl)-tris(pentafluorophenyl)borate, (4-diisopropylaluminumoxy-3,5-di(t-butyl)phenyl) tris(pentafluorophenyl)borate,
(4-diisopropylaluminumoxybenzyI) tris(pentafluorophenyl)borate, (4-diisopropylaluminumoxy-3-methylphenyl) tris(pentafluorophenyl)borate,
(4-diisopropylaluminumoxy-tetrafluorophenyl) tris(pentafluorophenyl)borate, (5-diisopropyIaluminumoxy-2-naphthyI)tris(pentafluorophenyl)borate,
4-(4-diisopropylaluminumoxyphenyl)phenyl tris(pentafluorophenyl)borate, and
4-(2-(4-(diisopropylaluminumoxyphenyl)propane-2-yl)phenyloxy) tris(pentafluorophenyl)borate.

Especially preferred ammonium compounds are methyldi(tetradecyl)ammonium (4-diethylaluminumoxyphenyl) tris(pentafluorophenyl)borate, methyldi(hexadecyl)ammonium (4-diethylaluminumoxyphenyl) tris(pentafluorophenyl)borate, methyldi(octadecyl)ammonium (4-diethylaluminumoxyphenyl) tris(pentafluorophenyl) borate, and mixtures thereof. The foregoing complexes are disclosed in U.S. Pat. Nos. 5,834,393 and 5,783,512.

Another suitable ion-forming, activating compound comprises a salt of a cationic oxidizing agent and a noncoordinating, compatible anion represented by the formula:

(Oxe+)d(Ad-)e,

wherein
Oxe+ is a cationic oxidizing agent having a charge of e+;
d is an integer from 1 to 3;
e is an integer from 1 to 3; and
Ad- is as previously defined.

Examples of cationic oxidizing agents include: ferrocenium, hydrocarbyl-substituted ferrocenium, Pb+2 or Ag+. Preferred embodiments of Ad- are those anions previously defined with respect to the Bronsted acid containing activating cocatalysts, especially tetrakis(pentafluorophenyl)borate.

Another suitable ion-forming, activating compound comprises a compound which is a salt of a carbenium ion and a noncoordinating, compatible anion represented by the formula

@+A-

wherein:
@+ is a C1-20 carbenium ion; and
A- is a noncoordinating, compatible anion having a charge of -1. A preferred carbenium ion is the trityl cation, especially triphenylmethylium.

Preferred carbenium salt activating cocatalysts are triphenylmethylium tetrakis(pentafluorophenyl)borate, triphenylmethylium tetrakis(nonafluorobiphenyl)borate, tritolylmethylium tetrakis(pentafluorophenyl)borate and ether substituted adducts thereof.
The activating compounds may also be used in combination. An especially preferred combination is a mixture of a tri(hydrocarbyl)aluminum or tri(hydrocarbyl)borane compound having from 1 to 4 carbons in each hydrocarbyl group with an oligomeric or polymeric alumoxane compound.

The molar ratio of the rare earth element compound / the at least one activator compound typically ranges of from 1:10,000 to 10:1, preferably of from 1:5000 to 10:1, more preferably of from 1:2500 to 1:1.

Alumoxane, when used by itself as an activating compound, is preferably employed in large molar ratio, generally at least 50 times the quantity of the rare earth element compound on a molar basis. Tris(pentafluorophenyl)borane, where used as an activating compound, is preferably employed in a molar ratio to the rare earth element compound of from 0.5:1 to 10:1, more preferably from 1:1 to 6:1, most preferably from 1:1 to 5:1.

If the above-mentioned ion-forming compound comprising a compatible non-coordinating or poorly coordinating anion is used as an activating compound, it is preferable for the rare earth element compound according to the invention to be alkylated. Activators comprising boron are preferred.

Further activating compounds for use herein are combinations of neutral optional Lewis acids, especially the combination of a trialkyl aluminum compound having from 1 to 4 carbons in each alkyl group with one or more C1 - 30 hydrocarbyl-substituted Group 13 Lewis acid compounds, especially halogenated tetrakis(hydrocarbyl)boron or -aluminum compounds having from 1 to 20 carbons in each hydrocarbyl group, especially tetrakis(pentafluorophenyl)borate, tetrakis(3,5-bis(trifluoromethyl)phenyl)borate, further combinations of a single neutral Lewis acid, especially tetrakis(pentafluorophenyl)borate or tetrakis(3,5-bis(trifluoromethyl)phenyl)borate, with a polymeric or oligomeric alumoxane. A benefit according to the present invention is the discovery that the most efficient catalyst activation using such a combination of tetrakis(pentafluorophenyl)borate/ alumoxane mixture occurs at reduced levels of alumoxane.
Preferred molar ratios of the rare earth compound : tetrakis(pentafluorophenyl)borate : alumoxane from 1:1:1 to 1:5:1.000, more preferably from 1:1:1.5 to 1:5:500. The surprising efficient use of lower levels of alumoxane with the present invention allows for the production of diene polymers with high catalytic efficiencies using less of the expensive alumoxane activator. Additionally, polymers with lower levels of aluminum residue, and hence greater clarity, are obtained. Preferred molar ratios of the metal complex:tetrakis(pentafluorophenyl)borate:neutral optional Lewis acids especially trialkyl aluminum or dialkyl aluminum hydride compounds are from 1:1:10 to 1:10:1000, more preferably from 1:1:20 to 1:5:500. Also in this case polymers are obtained with lower levels of aluminum residue, and hence greater clarity, are obtained.

The catalyst composition used in the process according to the invention either comprises at least one of the above rare earth element compounds as well as at least one of the activator compounds identified above, or the catalyst composition may comprise a reaction product of the activator compound and the rare earth element compound.

The catalyst composition may be formed, e.g. in situ in the polymerization reactor by adding the individual components of the catalyst composition (i.e. the rare earth element compound and the at least one activator compound) to a solution of the monomers. The term "in situ" in the context of the present invention means that the catalyst composition is not isolated prior to its use. For such a formation, at least one component of the catalyst composition is added individually. If the catalyst composition comprises a dialkyl aluminum hydride according to general formula (A6) and an alkyl aluminum chloride as a Lewis acid, then it may be preferable to, e.g. add the rare earth element compound and the dialkyl aluminum hydride to the polymerization reactor comprising the Lewis acid and a solution of monomers. In any case, it is to be understood that at least three molar equivalents of a conjugated diene monomer should be present before adding the activator compound to the rare earth element compound so as to avoid catalyst deactivation.

The catalyst composition may be formed, e.g. in situ in the polymerization reactor, for example by contacting the rare earth element compound and the activator compound on a support as a carrier. The support (hereinafter also referred to as "carrier") can be chosen from: clay, silica, charcoal (activated carbon), graphite, expanded clay, expanded graphite, carbon black, layered silicates, and alumina. Clays and layered silicates include, but are not limited to, magadiite, montmorillonite, hectorite, sepiolite, attapulgite, smectite, and laponite. Supported catalyst compositions of the invention may be prepared by several methods. For example, the rare earth element compound and optionally the activator compound can be combined before the addition of the support material. As discussed herein below, the mixture may be prepared in a conventional solution using a solvent. The solvent is preferably also suitable for use as a polymerization diluent for the liquid phase polymerization of an olefin monomer. Alternatively, the activator compound can be placed on the support material followed by the addition of the rare earth element compound or conversely, the rare earth element compound may be applied to the support material followed by the addition of the activator compound. The catalyst can be supported onto the carrier material using techniques such as solid-phase immobilization (SPI) described by H.C.L. Abbenhuis in Angew. Chem. Int. Ed. 37 (1998) 356-58 and by M. Buisio et al., in Microporous Mater., 5 (1995) 211 and by J.S. Beck et al., in J. Am. Chem. Soc., 114 (1992) 10834, as well as pore volume impregnation (PVI) (see WO 97/24344). The isolation of the impregnated carrier can be done by filtration or by removing the volatile material present (i.e., solvent) under reduced pressure or by heating.

The support, if present, is preferably employed in an amount to provide a weight ratio of catalyst composition (based on metal): support from 1:100,000 to 1:10, more preferably from 1:50,000 to 1:20, and most preferably from 1:10,000 to 1:30.

Instead of forming the catalyst composition in situ, the catalyst composition can also be preformed, for example by subjecting the rare earth element compound and the activator compound to an aging reaction in an aging reactor wherein a limited amount of diene is added to a mixture of the rare earth element compound and activator compound.

The catalyst composition may be formed in a suitable non-interfering solvent or reaction medium at a temperature of from -78°C to 250°C, preferably of from -5°C to 160°C, more preferably of from 10°C to 110°C. Suitable reaction media for the formation of the catalyst composition are aliphatic and aromatic hydrocarbons and halohydrocarbons. Examples include straight and branched-chain hydrocarbons such as isobutane, butane, pentane, hexane, heptane, octane, and mixtures thereof, cyclic and alicyclic hydrocarbons such as cyclohexane, cycloheptane, methylcyclohexane, methylcycloheptane, and mixtures thereof; chlorinated-, fluorinated- or chlorofluorinated hydrocarbons such as chloroform, dichloromethane, chlorobenzene, dichlorobenzene, and perfluorinated C4-10 alkanes; aromatic and hydrocarbyl-substituted aromatic compounds such as benzene, toluene, xylene, and styrene. If the catalyst composition is not formed in situ, the reaction medium used for forming the catalyst composition is in one preferred option the same reaction medium as the one used in polymerization step i), obviating the need to use a secondary solvent system.
If the catalyst composition is not formed in situ, the reaction medium used for forming the catalyst composition may then in another preferred option correspond to one of the solvents used the reaction medium in polymerization step i), obviating the need to use a secondary solvent system. Separately prepared or preformed catalyst compositions can be stored at room temperature or even at elevated temperatures such as, for example, but not limited to, 50°C, in the solid state for extended periods of time. In addition, solutions of the catalyst compositions may be stored at room temperature before use. This greatly increases the flexibility of production in an industrial plant. A separately prepared (or preformed) catalyst composition usually does not require a separate aging step and if it is desirable to employ an optional aging step, it advantageously does not require long aging times. In case of a preformed catalyst, it is possible to start the polymerization reaction by adding the catalyst composition and the one or more diene monomer in any order into the polymerization reactor. The polymerization can be started for example either by addition of the catalyst composition to the monomer or by the addition of the one or more diene monomers as the last component. Alternatively, the catalyst composition - i.e. its individual components (including the rare earth element compound and the activator compound) or a reaction product hereof - or a solution thereof, may be fed to the polymerization reactor simultaneously during addition of the one or more diene monomers.

In the polymerization process, the catalyst composition is used in a catalytically effective amount, i.e., any amount that successfully results in the formation of a polymer. Such amounts may be readily determined by routine experimentation by the worker skilled in the art, but typically the molar ratio of catalyst composition: diene monomers is from 10⁻¹²:1 to 10⁻¹:1, more preferably from 10⁻¹²:1 to 10⁻³:1.

The catalyst composition may also be utilized in combination with at least one additional homogeneous or heterogeneous polymerization catalyst in the same or in separate reactors connected in series or in parallel to prepare polymer blends having desirable properties, such as for example a different molecular weight distribution, including a bimodal molecular weight distribution. An example of such a process is disclosed in WO 94/00500, equivalent to U.S. Ser. No. 07/904,770, as well as U.S. Pat. No. 5,844,045. In case of solution or suspension/slurry type polymerizations as described herein below, the quantity of rare earth metal comprised in the catalyst composition to be used generally is such that its concentration in the solvent or dispersion agent amounts to 10⁻⁸ - 10⁻³ mol/L, preferably 10⁻⁷ - 10⁻⁴ mol/L.

Step I) of polymerizing the at least one diene monomer is preferably conducted at a temperature of between -50 and +250 °C, preferably between -5 and +160 °C, more preferably between 10 °C and 110 °C.

In general, homo- and co-polymerization of the conjugated diene monomers may be accomplished at conditions well known in the art for Ziegler-Natta or Kaminsky-Sinn type polymerization reactions, such as at temperatures of from -50 to 250 °C. The polymerization is generally conducted under batch, continuous or semicontinuous polymerization conditions. The polymerization process can be conducted as a gas phase polymerization (e.g. in a fluidized bed or stirred bed reactor), as a solution polymerization, wherein the homopolymer or copolymer formed is substantially soluble in the reaction mixture, a suspension/slurry polymerization, wherein the polymer formed is substantially insoluble in the reaction medium, as a solid phase powder polymerization or as a so-called bulk polymerization process, in which case an excess of monomer to be polymerized is used as the reaction medium. Preferably, the process according to the present invention is conducted under solution or bulk polymerization conditions. The polymerization may be conducted in one or more continuous stirred reactors or fluidized bed, gas phase reactors, connected in series or parallel. Monomer and/or solvent may be added to the reactor as is well known in the art. A continuous process is preferred, in which event advantageously, e.g. a mixture of the reaction components including catalyst composition, solvent and dienes is substantially supplied continuously or at frequent intervals into the reactor system, and polymerization is continuously monitored so as to ensure an efficient reaction and the production of the desired product which is continuously removed. For example, it is well known that many supported coordination catalysts and catalyst compositions for polymerization processes are highly sensitive, in varying degrees, to catalyst poisons such as water, oxygen, carbon oxides, acetylenic compounds and sulfur compounds. Introduction of such compounds may result in reactor upset and production of off-grade product. Typically, computer control and monitoring systems may be used to maintain process variables within acceptable limits, often by measuring polymer variables such as temperature, viscosity, molecular weight, flow rates or catalyst productivity. If the polymerization process is carried out under suspension or gas phase polymerization conditions, the temperatures typically are below 150 °C.

The polymerization can be effected at atmospheric pressure, at sub-atmospheric pressure, or at elevated pressure of up to, or even higher than 500 MPa, continuously or discontinuously. Preferably, the homo- or copolymerization is performed at a pressure of from 0.01 to 500 MPa, more preferably at a pressure of from 0.01 to 10 MPa, most preferably at a pressure of from 0.1 to 2 MPa. Slurry and solution polymerizations normally take place at relatively low pressures, preferably at a pressure of less than 10 MPa. The polymerization can be carried out in the gas phase as well as in a liquid reaction medium.

The catalyst composition may be used to homopolymerize or copolymerize one or more diene monomers, preferably conjugated diene monomers having from 4 to 50 preferably from 4 to 12 carbon atoms either alone to give homopolymers or in combination with at least one different type of diene monomer or with a type of alpha-olefines for copolymers. Preferred monomers include conjugated dienes chosen from the group comprising internal conjugated olefins, cyclic conjugated olefins and non-cyclic conjugated olefins. Preferred conjugated dienes are 1,3-butadiene, isoprene (2-methyl-1,3-butadiene), 2,3-dimethyl-1,3-butadiene, 1,3-pentadiene, 2,4-hexadiene, 1,3-hexadiene, 2,4-hexadiene, 1,3-heptadiene, 1,3-octadiene, 2-methyl-2,4-pentadiene, cyclopentadiene, 2,4-hexadiene, 1,3-cyclooctadiene. Preferred alpha-olefine monomers for use as a comonomer in the polymerization of diene monomers are selected from ethene, propene, 1-butene, 1-pentene, 1-hexene, 4-methyl-1-pentene,1-octene, styrene, alpha methylstyrene, divinyl benzene, acrylonitrile, acrylic acid ester, methylmethacrylate, ethylmethacrylate and n-butylmethacrylate. Ethylene, propene and styrene are preferred alpha-olefins.

Especially desirable polymers that are obtainable according to the present invention are homo-, co- and terpolymers of conjugated dienes, especially butadiene or isoprene, and random or block copolymers of at least one conjugated diene, especially butadiene, with at least one different type of conjugated diene, especially isoprene. Especially preferred are the homopolymerization of butadiene or isoprene as well as random or block copolymerizations, optionally terpolymerizations, of at least one conjugated diene, especially butadiene with at least one different type of conjugated diene, especially isoprene. Particularly preferred homopolymers are polybutadiene, and particularly preferred copolymers are copolymers of butadiene, isoprene and/or styrene. Butadiene and isoprene can be used as monomers regardless of their origin, including biochemical monomer synthesis processes, for example starting from biomass readily available, for example sugar.

In a preferred embodiment, dienes which can be used in the process according to the invention thus comprise at least one of butadiene, isoprene, pentadiene and 2,3-dimethylbutadiene, or a mixture of two or more of the monomers. In a preferred embodiment, the one or more diene monomers that are polymerized in step I) thus comprise at least one of these components. Depending on the polymer to be produced, step I) of polymerizing one or more diene monomers comprises a mixture of these dienes, e.g. a mixture of butadiene and isoprene. In a further embodiment, other monomers can be incorporated in polymerization step I) in addition to the one or more diene monomers indicated above. For example, such monomers preferably include styrene.

In a further embodiment, step I) of polymerizing one or more dienes is conducted in the presence of an organic solvent. Examples of suitable solvents include aromatic, aliphatic and/or cycloaliphatic hydrocarbons such as benzene, pentane, n-hexane, isohexane, heptane and/or cyclohexane. Preferably, polymerization is carried out in the presence of one of these solvents or a mixture thereof. Preferably, the inert organic solvent is used in amounts from 200 to 900 parts by weight, based on 100 parts by weight of monomer.

In one embodiment, polymerization step I) is carried out up to a conversion of as much as 99.9% of the diene monomers. Typically, the reaction mixture reaches 70% conversion or more, preferably 90% conversion or more, more preferably 95% or more, even more preferably 98% or more, most preferably 98% to 99,5% before the at least one alkoxysilane compound is optionally added in step II). Conversion can be detected by means of standard gravimetric methods using a Halogen Moisture Analyzer HR73 from Mettler Toledo.

In optional step II) of the process that can be used for the preparation fo the first polymer (A), at least one alkoxysilane compound is added to the reaction mixture obtained in step I). The at least one alkoxysilane compound is selected from the compounds represented by the above formulae (A1) through (A5). Preferred alkoxysilane compounds are selected from the above formulae (A1) to (A5), wherein groups R1, R2, R3, R4, R5, R6, R8, R9, R10, R12, R13 and R14 in formulae (A1) to (A5) independently from each other are C1-8 alkyl groups. In a more preferred embodiment, R1, R3, R5, R9, R13 and R14 in formulae (A1) to (A5) independently from each other are C1-4 alkyl groups, preferably methyl or ethyl. Preferably, the one or more alkoxysilane compounds are selected from the above formulae (A1), (A2), (A3) and (A4), more preferably from (A1) and (A3). In a preferred embodiment of Formula (A1): if s is 1, q is an integer selected from 4; r is an integer selected from 0; and q + r = 4; and if s in formula (A1) is 2, then q preferably is an integer selected from 3; r is an integer selected from 0; and q + r = 3. In a preferred embodiment of Formula (A2): t is an integer selected from 3; u is an integer selected from 0; and t + u = 3. In a preferred embodiment of Formula (A3): w is an integer selected from 3; x is an integer selected from 0; and w + x = 3; and in a preferred embodiment of Formula (A4): y is an integer selected from 3; z is an integer selected from 0; and y + z = 3.

The term "alkyl" as used throughout the invention refers to a hydrocarbon group that may be straight chain, branched or cyclic, having the number of carbon atoms designated (i.e. C1-8 alkyl means 1-8 carbon atoms). Examples of alkyl groups include methyl, ethyl, n-propyl, isopropyl and butyl, t-butyl, isobutyl, sec-butyl, cyclohexyl, cyclopentyl, (cyclohexyl)methyl, (cyclopropyl)methyl, octane, etc. Alkyl groups can be substituted or unsubstituted. Examples of substituted alkyl groups include haloalkyl, thioalkyl, aminoalkyl, and the like.

In a preferred embodiment, the alkoxysilane is selected from (CH3O)4Si, ((CH3O)3Si)2 and
(CH3O)2Si(CH3)-(CH2)3-S-Si(CH3)2C(CH3)3 and mixtures thereof.

Preferably, the amount of alkoxysilanes as added in step II) of the present process is based on a molar ratio ([mol]/[mol]) of Si as contained in the alkoxysilane compound / polymer of from 0.2 to 2, preferably of from 0.5 to 1.

Addition of the at least one alkoxysilane compound is preferably done at a temperature of from 30 to 100 °C, and the at least one alkoxysilane compound is preferably added at a pressure of from 0.2 to 5 bar.

As regards optional step III) of adding S2C12, SCl2, SOCl2, S2Br2, SOBr2 or a mixture thereof to the reaction mixture obtained in step II), typically less than 0,05 parts by weight, preferably 0.01 to 0.045, more preferably 0.01 to 0.035, and even more preferably 0.01 to 0.02 parts by weight of S2Cl2, SCl2, SOCl2, S2Br2, SOBr2 or a mixture thereof are added to 100 parts by weight of diene polymer. In a preferred embodiment, S2Cl2 and/or S2Br2 are added in step III).

It has been found that keeping the amounts of S2Cl2, SC12, SOC12, S2Br2, SOBr2 or the mixture thereof in the indicated ranges facilitates valuable solution viscosities of the resulting polymer. "Valuable" solution viscosities in this context means that the solution viscosity can be reduced as compared to prior art polymers having a similar number average molecular weight (Mn). At the same time these ranges allow the composition comprising the polymers and a filler to gain a favourable Mooney viscosity value as compared to compositions which are based on conventional polymers and the filler. Therefore, the invention enables relatively low Mooney viscosity values in the context of compositions comprising a polymer according to the present invention and a filler such as carbon black or silica if compared with the corresponding Mooney viscosity of a composition comprising a prior art polymer and the filler wherein both polymers (i.e. the polymer according to the invention as well as the prior art polymer) have similar Mooney viscosity values before mixing them with the filler.

S2C12, SC12, SOCl2, S2Br2, SOBr2 or the mixture thereof are usually added at a temperature of from 20 to 150 °C, preferably at a temperature of from 30 to 120 °C, more preferably at a temperature of from 40 to 90 °C.

In optional step III), S2Cl2, SC12, SOCl2, S2Br2, SOBr2 or the mixture thereof is stirred with the reaction mixture for more than 1 minutes, preferably for about 2 to 60 minutes, more preferably for about 3 to 30 minutes before work up. Work up may include step IV), i.e. the optional addition of a protic agent to deactivate the catalyst composition.

The protic agent used in optional step IV) for catalyst deactivation can be any suitable protic agent such as water, an organic acid or an alcohol. Suitable organic acids include stearic acid. Suitable alcohols include methanol, ethanol and iso-propanol. The amount used for catalyst deactivation preferably is in the range of from 1 to 30 Mol of protic agent per Mol of the rare earth element, more preferably of from 2 to 20, most preferably of from 3 to 10 Mol of protic agent per Mol of the rare earth element. Without wishing to be bound by theory, it is believed that addition of water, an organic acid and/or an alcohol not only deactivates the catalyst but also renders metal organic residues derived from the rare earth catalyst less reactive and thus less dangerous. Removal of the catalyst composition, the thio compound and the alkoxysilane can sometimes be omitted, particularly when the quantity of components of the catalyst composition, of the thio compound and/or the alkoxysilane compound in the polymer or copolymer, in particular the content of halogen and metal, is very low. If desired, however, the level of residues derived from the catalyst composition, from the thio compound or from the alkoxysilane compound in the polymer, can be reduced in a known manner, for example, by washing. The deactivation step can be followed by a stripping step (removal of organic solvent(s) from the polymer). Alternatively the solvent can be removed at reduced pressure.

In a particularly preferred embodiment of the invention, 94 % by weight or more of the butadiene monomers are incorporated into the polymer chains of the first polymer in the form of the cis-1,4-butadiene isomer and 0 to 2 % by weight of the butadiene monomers are incorporated into the polymer chains in the form of the 1,2-butadiene isomers.

### Other suitable ways to obtain first polymer (A)

In one embodiment polymer A is obtained according to EP2861629 B2 (Lanxess) by polymerization of butadiene by a preformed catalyst prepared by reaction of the following components: diisobutylaluminium hydride, triisobutylaluminium, isoprene and neodymium versatate at a temperature of 45-55 °C in a nonpolar solvent, preferably hexane. Prior to addition of ethylaluminium sesquichlorde the reaction mixuture is aged for 5 to 24 hours at a temperature ranging from -35 to -25 °C. The resulting mixture is used for initiation of the polymerization reaction.
In a further embodiment polymer A is obtained by a gas phase polymerization of butadiene by a silica gel supported catalyst prepared by reaction of methylalumoxane in toluene with tris-π-allylneodymium and removal of the solvent.

In a further embodiment polymer A is obtained by reaction of [(C5Me5)2Gd][B(C6F5)4] in toluene with triisobutylaluminium and addition of butadiene to the catalyst mixture at reduced temperature, preferably -35 to -45 °C.

### Structure of the first elastomeric polymer

In one embodiment, the first elastomeric polymer (A) is a high cis high molecular weight butadiene homopolymer. In another embodiment, the first polymer (A) is a random or block co- or terpolymer obtainable by polymerization of butadiene monomers and at least one further conjugated diene monomer.

The first polymer (A) has a weight average molecular weight (herein after abbreviated as Mw) of from 600.000 to 4.500.000 g/mol, preferably 750.000 to 1.250.000 g/mol. The first polymer (A) has a number average molecular weight (herein after abbreviated as (Mn) in the range of from 200.000 to 1.500.000 g/mol, preferably 240.000 to 600.000 g/mol. Mw and Mn values as used herein are measured by size exclusion chromatography (herein abbreviated as SEC) and converted to polystyrene equivalents.

The weight ratio of the butadiene monomers to the optional further conjugated diene monomers is preferably in the range of greater 90:10.

### Component (B) - second polymer having a low molecular weight

In a first embodiment, component (B), i.e. the second polymer of the blend as defined in claim 1, is a polymer having a weight average molecular weight (Mw) of 500 to 100.000 g/mol, the second polymer being obtainable by: (i) anionic polymerization in the presence of a polymerization initiator in an organic solvent of (i-1) at least one conjugated diene monomer, or (i-2) at least one conjugated diene monomer and one or more α-olefin monomer(s), or (i-3) at least one or more α-olefin monomer(s), and (ii) modification of the polymer chain ends obtained in (i) by addition and reaction of at least one compound represented by any of formula (1), formula (3), or formula (11) to (18), as defined herein.

Thus, the second polymer (B) in the polymer blend according to the invention is a modified butadiene-copolymer (herein abbreviated as BR) and a modified styrene-butadiene-polymer (SBR).

For the specific condition(s) for the anionic polymerization reaction (i), including suitable conjugated diene monomer(s), α-olefin monomer(s), polymerization initiator(s), solvent(s), temperature(s), and for the modification reaction (ii), including suitable modification agents, for the preparation of component (B), reference is made to the preparation disclosed in EP 3 059 256 A1 with regard to component (b) of this document.

In preferred embodiments, the polymerization initiator for the anionic polymerization reaction is preferably selected from n-butyl lithium, sec-butyl lithium, or any other initiator compound addressed in claim 4 of the present application.

Moreover, in a preferred embodiment, the second polymer (B) is an elastomeric polymer, such as e.g. a styrene-butadiene- or a butadiene-polymer.

Component (B) of the polymer blend, as defined in claim 1, is a second polymer having a low molecular weight. The amount of component (B) in the polymer blend, as defined in claim 1, is in the range of 4 to 35 percent by weight, more preferably 10 to 30 percent by weight, most preferably 13 to 25 percent by weight, based on the total weight of the first and second polymer of the blend.

The second polymer (B) preferably has a number average molecular weight (herein abbreviated as Mₙ) in the range of 500 to 80,000 g/mol, more preferably in the range of 1,000 to 50,000 g/mol, most preferably in the range of 2,000 to 25,000 g/mol, as measured by size exclusion chromatography (herein abbreviated as SEC) and converted to polystyrene equivalents.

The second polymer (B) has a weight-average molecular weight (herein abbreviated as M_{W}) in the range of 500 and 100,000 g/mol, more preferably in the range of 1,000 to 50,000 g/mol, as measured by size exclusion chromatography (herein abbreviated as SEC) and converted to polystyrene equivalents.

In other words, the second polymer (B) is of low molecular weight, as defined above.

In one embodiment, the vinyl content of the second polymer (B) in case of a butadiene or isoprene homopolymer (B) is preferably from 5 to 80 percent by weight and the styrene or divinylbenzene content less than 1 percent by weight.

In one embodiment, the vinyl content of the second polymer (B) in case of a butadiene-styrene-copolymer (B) is preferably from 5 to 75 percent by weight and the styrene content of the second polymer (B) is preferably from 1 to 70 percent by weight, more preferred from 5 to 60 percent by weight, and most preferred from 10 to 50 percent by weight.

In one embodiment, the styrene content of the second polymer (B) in case of a styrene homopolymer is preferably higher than 90 percent by weight, more preferred higher than 95 percent by weight and most preferred higher than 98 percent by weight.

It is further preferred that the second polymer (b) in the polymer blend according to the invention has a glass transition temperature (herein abbreviated as T_{g}) of -95°C to 30°C, as measured by DSC (see test methods below).

### An optionally present (conventional) extender oil having a low molecular weight

Small amounts of an extender oil may optionally be present in the polymer blend. Such conventional extender oil having a low molecular weight that are also known as softeners is hereinafter also referred to as component (C).

The amount of component (c) in the polymer blend, if present, may be in the range of 0 to 13 percent by weight, based on the total weight of the polymer blend. If a higher amount of component (c) is used, the parameter attributes of the crosslinked vulcanizates, comprising the polymer blend, as defined herein, especially the abrasion resistance and the grip of the polymer blend/polymer composition deteriorate.

For representative examples and classification of the extender oils, reference is made to International Patent Application No. PCT/US09/045553 and U.S. Patent Application Publication No. 2005/0159513, each of which is incorporated herein by reference in its entirety. Representative extender oils include, but are not limited to, MES (Mild Extraction Solvate), TDAE (Treated Distillate Aromatic Extract), RAE (Residual Aromatic Extract) including, without limitation, T-RAE and S-RAE, DAE including T-DAE and NAP (light and heavy naphthenic oils), including, but not limited to, Nytex 4700, Nytex 8450, Nytex 5450, Nytex 832, Tufflo 2000, and Tufflo 1200. In addition, native oils, including, but not limited to, vegetable oils, can be used as extender oils. Representative oils also include functionalized variations of the aforementioned oils, particularly epoxidized or hydroxylated oils. The aforementioned extender oils comprise different concentrations of polycyclic aromatic compounds, paraffinics, naphthenics and aromatics, and have different glass transition temperatures. The above mentioned types of oil have been characterized (Kautschuk Gummi Kunststoffe, vol. 52, pages 799-805). In preferred embodiments, MES, RAE and/or TDAE are used as (conventional) extender oils.

### Preparation of the polymer blend

The polymer blend according to the invention can be prepared by mixing of the respective polymer solutions, as obtained after the polymerization reaction (including the modification reaction, if applicable) of the corresponding components, i.e. the first elastomeric polymer (A) as well as the second polymer (B), as described above. The optional extender oil(s) (C), if used at all, are then mixed into the obtained polymer solution, containing both the first elastomeric polymer (A) as well as the second polymer (B).

The polymer blend is then recovered from the polymer blend solution as usual known and used in industrial scale for rubber production for instance via steam stripping at an elevated temperature, preferably about 100°C, followed by a usual dewatering step and drying at elevated temperatures.

### The polymer composition

The present invention further provides a polymer composition, comprising the polymer blend of the first aspect of the invention, as described above.

In one embodiment, the polymer composition of the invention may also comprise one or more filler(s), which serve as reinforcement agents. Examples of suitable fillers include, without limitation, carbon black (including electroconductive carbon black), carbon nanotubes (CNT) (including discrete CNT, hollow carbon fibers (HCF) and modified CNT carrying one or more functional groups, such as hydroxyl, carboxyl and carbonyl groups) graphite, graphene (including discrete graphene platelets), silica, carbon-silica dual-phase filler, clays including layered silicates, calcium carbonate, magnesium carbonate, lignin, amorphous fillers, such as glass particle-based fillers, starch-based fillers, and combinations thereof. Further examples of suitable fillers are described in WO 2009/148932 which is incorporated herein by reference in its entirety.

Examples of suitable carbon black include, without limitation, the one conventionally manufactured by a furnace method, for example having a nitrogen adsorption specific surface area of 50-200 m²/g and DBP oil absorption of 80-200 mL/100 grams, such as carbon black of the FEF, HAF, ISAF or SAF class, and electroconductive carbon black. In some embodiments, high agglomeration-type carbon black is used. Carbon black is typically used in an amount of from 2 to 100 parts by weight, or 5 to 100 parts by weight, or 10 to 100 parts by weight, or 10 to 95 parts by weight per 100 parts by weight of the total polymer.

Examples of suitable silica fillers include, without limitation, wet process silica, dry process silica and synthetic silicate-type silica. Silica with a small particle diameter and high surface area exhibits a high reinforcing effect. Small diameter, high agglomeration-type silica (i.e. having a large surface area and high oil absorptivity) exhibits excellent dispersibility in the polymer composition, resulting in superior processability. An average particle diameter of silica in terms of the primary particle diameter may be from 5 to 60 nm, more preferably 10 to 35 nm. The specific surface area of the silica particles (measured by the BET method) may be from 35 to 300 m²/g. Silica is typically used in an amount of from 10 to 150 parts by weight, or 30 to 130 parts by weight, or 50 to 130 parts by weight per 100 parts by weight of the total polymer.

Silica fillers can be used in combination with other fillers, including, without limitation, carbon black, carbon nanotubes, carbon-silica dual-phase-filler, graphene, graphite, clay, calcium carbonate, magnesium carbonate and combinations thereof.

Carbon black and silica may be added together, in which case the total amount of carbon black and silica is from 30 to 150 parts by weight or 50 to 150 parts by weight per 100 parts by weight of the total polymer.

Carbon-silica dual-phase filler is so called silica-coated carbon black made by coating silica on the surface of carbon black and commercially available under the trademark CRX2000, CRX2002 or CRX2006 (products of Cabot Co.). Carbon-silica dual-phase filler is added in the same amounts as described above with respect to silica.

In another embodiment, the polymer composition comprising the polymer blend according to the invention may optionally comprise one or more vulcanizing agent(s) (or crosslinking agent(s)). The terms "vulcanizing agent" and "crosslinking agent" (or "vulcanizing" and "crosslinking", respectively) are used herein interchangeably.

Sulfur, sulfur-containing compounds acting as sulfur-donors, sulfur-accelerator systems, and peroxides are the most common vulcanizing agents. Examples of sulfur-containing compounds acting as sulfur-donors include, but are not limited to, dithiodimorpholine (DTDM), tetramethylthiuramdisulfide (TMTD), tetraethylthiuramdisulfide (TETD), and dipentamethylenthiuramtetrasulfide (DPTT). Examples of sulfur accelerators include, but are not limited to, amine derivatives, guanidine derivatives, aldehydeamine condensation products, thiazoles, thiuram sulfides, dithiocarbamates, and thiophosphates. Examples of peroxides used as vulcanizing agents include, but are not limited to, di-*tert*.-butyl-peroxides, di-(*tert*.-butyl-peroxy-trimethyl-cyclohexane), di-(*tert*.-butyl-peroxy-isopropyl-)benzene, dichloro-benzoylperoxide, dicumylperoxides, *tert*.-butyl-cumyl-peroxide, dimethyl-di(*tert*.-butyl-peroxy)hexane and dimethyl-di(*tert*.-butyl-peroxy)hexine and butyl-di(*tert*.-butyl-peroxy)valerate *(*Rubber Handbook, SGF, The Swedish Institution of Rubber Technology 2000*).* Further examples and additional information regarding vulcanizing agents can be found in Kirk-Othmer, Encyclopedia of Chemical technology 3rd, Ed., (Wiley Interscience, N.Y. 1982), volume 20, pp. 365-468, (specifically "Vulcanizing Agents and Auxiliary Materials" pp.390-402).

In addition, the polymer composition comprising the polymer blend according to the invention may also include up to 10 percent by weight of one or more extender oil(s), based on the total weight of the polymer composition. Extender oil(s) have already been described above.

A vulcanizing accelerator of sulfene amide-type, guanidine-type, or thiuram-type may be used together with a vulcanizing agent, as required. Other additives such as zinc white, vulcanization auxiliaries, aging preventives, processing adjuvants, and the like may be optionally added. A vulcanizing agent is typically added to the polymer composition in an amount from 0.5 to 10 parts by weight and, in some preferred embodiments, from 1 to 6 parts by weight for 100 parts by weight of the total elastomeric polymer. Examples of vulcanizing accelerators, and the amount of accelerator added with respect to the total polymer, are given in International Patent Publication No. WO 2009/148932. Sulfur-accelerator systems may or may not comprise zinc oxide. Preferably, zinc oxide is applied as component of the sulfur-accelerator system.

In some embodiments, a silane coupling agent (used for compatibilization of polymer and fillers) may be added to the polymer composition comprising the polymer blend according to the invention and silica, layered silicate (such as magadiite) or carbon-silica dual-phase filler. The typical amount of a silane coupling agent added is from about 1 to about 20 parts by weight and, in some embodiments, from about 5 to about 15 parts by weight for 100 parts by weight of the total amount of silica and/or carbon-silica dual-phase filler.

Silane coupling agents can be classified according to the Fritz Röthemeyer, Franz Sommer: Kautschuk Technologie, (Carl Hanser Verlag 2006):
(A) bifunctional silanes including, without limitation, Si 230 (EtO)₃Si(CH₂)₃Cl, Si 225 (EtO)₃SiCH=CH₂, A189 (EtO)₃Si(CH₂)₃SH, Si 69 [(EtO)₃Si(CH₂)₃S₂]₂, Si 264 (EtO)₃Si-(CH₂)₃SCN, and Si 363 (EtO)Si((CH₂-CH₂O)₅(CH₂)₁₂CH₃)₂(CH₂)₃SH) (Evonic Industries AG); and
(B) monofunctional silanes including, without limitation, Si 203 (EtO)₃-Si-C₃H₇, and Si 208 (EtO)₃-Si-C₈H₁₇.

Further examples of silane coupling agents are given in International Patent Application No. PCT/US2009/045553, and include, but are not limited to, bis-(3-hydroxy-dimethylsilyl-propyl)tetrasulfide, bis-(3-hydroxy-dimethylsilyl-propyl)-disulfide, bis-(2-hydroxy-dimethylsilyl-ethyl)tetrasulfide, bis-(2-hydroxy-dimethylsilyl-ethyl)disulfide, 3-hydroxy-dimethylsilyl-propyl-N,N-dimethylthiocarbamoyltetrasulfide, and 3-hydroxy-dimethylsilyl-propylbenzothiazole-tetrasulfide.

### A method for the preparation of the crosslinked elastomeric polymer

In yet another aspect, the present invention thus relates to a method for the preparation of a crosslinked elastomeric polymer, said method comprising the following steps: (1) Providing the polymer blend according to the first aspect of the invention or the polymer composition according to the second aspect of the invention; (2) Adding one or more filler(s) and optionally at least one or more silane coupling agent(s); and compounding said mixture; and (3) Adding a vulcanizing agent and optionally at least one or more vulcanizing accelerator(s) to the mixture of step (2); and cross-linking said mixture.

Steps (1) to (3) relate to the compounding of the polymer blend or the polymer composition, comprising the polymer blend, according to the invention and vulcanizing the polymer composition, comprising the polymer blend, and may be conducted using conventional compounding/vulcanization equipment. Conventional filler(s), silane coupling agent(s), vulcanizing agent(s) and vulcanizing accelerator(s) to be used in the method for the preparation of a crosslinked elastomeric polymer have already been described above.

### Crosslinked elastomeric polymer, article and polymer kit

The invention further is directed to crosslinked elastomeric polymers obtainable according to the above described method. Moreover, the present invention relates to articles, comprising the polymer composition, comprising the polymer blend according to the invention, or said crosslinked elastomeric polymer obtainable according to the above described method. In a preferred embodiment, the article according to the present invention is a tire, a tire tread, a tire side wall, a conveyer belt, a seal or a hose.

Moreover, the present invention relates to polymer kits, comprising (II.1) the polymer blend according to the invention, or (II.2) the polymer composition according to the invention.

### DEFINITIONS

Alkyl groups as defined herein, whether as such or in association with other groups, such as alkylaryl or alkoxy, include both straight chain alkyl groups, such as methyl (Me), ethyl (Et), n-propyl (Pr), n-butyl (Bu), n-pentyl, n-hexyl, etc., branched alkyl groups, such as isopropyl, tert-butyl, etc., and cyclic alkyl groups, such as cyclohexyl.

Alkoxy groups as defined herein include methoxy (MeO), ethoxy (EtO), propoxy (PrO), butoxy (BuO), isopropoxy, isobutoxy, pentoxy, and the like.

Aryl groups, as defined herein, include phenyl, and biphenyl compounds. Aryl groups preferably contain only one aromatic ring and most preferably contain a C₆ aromatic ring, i.e. benzene.

Alkylaryl groups, as defined herein, refer to a combination of one or more aryl groups bound to one or more alkyl groups, for example in the form of alkyl-aryl, aryl-alkyl, alkyl-aryl-alkyl and aryl-alkyl-aryl. Alkylaryl groups preferably contain only one aromatic ring and most preferably contain a C₆ aromatic ring.

A homopolymer or copolymer, as defined herein, may comprise a minor amount of a second or third monomer, such as e.g. divinylbenzene, in the range of up to 1 percent by weight, based on the total weight of the polymer.

### EXAMPLES

### Test methods

### Size Exclusion Chromatography

Molecular weight and molecular weight distribution of the polymer were each measured using size exclusion chromatography (SEC) based on polystyrene standards. Each polymer sample (9 to 11 mg) was dissolved in tetrahydrofuran (10 mL) to form a solution. The solution was filtered using a 0.45-µm filter. A 100-µL sample was fed into a GPC column (Hewlett Packard system 1100 with 3 PLgel 10µm MIXED-B columns). Refraction Index-detection was used as the detector for analyzing the molecular weight. The molecular weight was calculated as polystyrene based on the calibration with EasiCal PS1 (Easy A and B) Polystyrene standards from Polymer Laboratories. All molecular weight values, e.g. the number-average molecular weight (Mn) figures or the weight-average molecular weight (Mw) figures, are given based on the polystyrene standards. The molecular weight distribution is expressed as the dispersity D = Mw/Mn.

### Analysis to Measure Monomer Conversion

Monomer conversion was determined by measuring the solids concentration (TSC) of the polymer solution at the end of the polymerization. The maximum solid content is obtained at 100 wt% conversion of the charged butadiene (mBd) and styrene (mSt) for the final polymer by TSC max = (mBd+ mSt)/(mBd + mSt + mpolar agent + mNBL+ mcyclohexane)*100%. A sample of polymer solution ranging from about 1 g to about 10 g, depending on the expected monomer conversion, was drawn from the reactor directly into a 200-mL Erlenmeyer flask filled with ethanol (50 mL). The weight of the filled Erlenmeyer flask was determined before sampling ("A") and after sampling ("B"). The precipitated polymer was removed from the ethanol by filtration on a weighted paper filter (Micro-glass fiber paper, Ø 90 mm, MUNKTELL, weight "C"), dried at 140 °C, using a moisture analyzer HR73 (Mettler-Toledo) until a mass loss of less than 1 mg within 140 seconds was achieved. Finally, a second drying period was performed using switch-off at a mass loss of less than 1 mg within 90 seconds to obtain the final mass "D" of the dry sample on the paper filter. The polymer content in the sample was calculated as TSC = (D-C)/(B-A)*100%. The final monomer conversion was calculated as TSC/TSC max*100%.

### Analysis to Measure Monomer Conversion

The residual monomer content was determined by use of head space gas chromatography. The polymer solution is diluted with cyclohexane (Mass ratio 1:10). A part of this diluted sample (25 mg) was injected into a headspace vial and conditioned 10 min for 140°C. After this time a part of the vapor phase was injected into a gas chromatograph where separation and detection take place. Quantification was performed using external standard calibration.

### Analytical conditions:

| | |
|---|---|
| Device: | Agilent 7890 A with Headspace sampler Agilent G 1888 |
| Column | 60 m x 0.32 mm x 1.0 *µ*m PE-1 |
| Carrier gas | H2 3,5 mL/min ; constant flow |
| Oven temperature | 40°C (0 min) 8°C/min up to 180°C (0 min) |
| Injection | 250°C |

### Measurement of the glass (transition) temperature T_{g}

The glass transition temperature was determined using a DSC Q2000 device (TA instruments), as described in ISO 11357-2 (1999) under the following conditions:

| | |
|---|---|
| Weight: | about 10 - 12 mg; |
| Sample container: | standard alumina pans; |
| Temperature range: | (-140...80)°C; |
| Heating rate: | 20 K/min; |
| Cooling rate: | free cooling; |
| Purge gas: | 20 ml Ar/min; |
| Cooling agent: | liquid nitrogen; |
| Evaluation method: | inflection method. |

Each sample was measured at least once. The measurements contained two heating runs. The 2nd heating run was used to determine the glass transition temperature.

### ¹H-NMR/ ¹³C-NMR

Vinyl and total styrene content were measured using 1H-NMR, following ISO 21561-2005, using a NMR spectrometer IBRUKER Avance (400MHz), and a 5-mm dual probe. CDC13/TMS was used as solvent in a weight ratio of 0.05%: 99.95%. Cis-1.4 and trans 1.4 bondings were analysed using 13C-NMR according to ASTM D3677.

### Mooney viscosity

Mooney viscosity of the samples was measured according to ASTM_D 1646.

### Measurement of rheological properties

Measurements of non-vulcanized rheological properties according to ASTM D 5289-95 were made using a rotor-less shear rheometer (MDR 2000 E) to characterize cure characteristics, especially the scorch time ts2 and the the time to cure (t95). The "t95" times are the respective times required to achieve 95 % conversion of the vulcanization reaction.

. Test pieces were vulcanized by t95 at 160 °C, especially for hardness and rebound resilience tests the specimen were vulcanized by t95+5min at 160 °C. Tensile strength and moduli were measured according to ASTM D 412 on a Zwick Z010. DIN abrasion was measured according to DIN 53516 (1987-06-01). Hardness Shore A (ASTM D 2240) and rebound resilience (ISO 4662) were measured at 0 °C, RT and 60 °C. Dynamic properties, i.e. tan δ at 0 °C and 60 °C and E' at -25°C, were measured using dynamic spectrometer Eplexor 150N/500N manufactured by Netzsch Gabo Instruments GmbH (Germany) applying a compression dynamic strain of 0.2 % at a frequency of 2 Hz. Heat build-up was measured according to ASTM D 623, method A, on a Doli 'Goodrich'-Flexometer.

### RPA Strain Sweep

To confirm that the dispersive mixing was efficient in first mixing stage, green compounds from first stage compounding underwent a strain sweep experiment on an RPA 2000 (Rubber Process Analyzer) from Alpha Technologies GmbH. Therefore, the strain was gradually varied from 1 % to 500 % strain at a temperature of 70 °C and a frequency of 1 Hz to determine the storage modulus G' [kPa]. Subtracting the G' value obtained at 500 % strain from those obtained at 1 % strain gives the Payne effect, an indication for the dispersion of filler (the lower, the better).

### RPA Temperature Sweep

To determine the level of damping at 70 °C which serves as an indicator for rolling resistance in a tire (the lower, the better) by means of predictive lab testing, the abovementioned RPA 2000 device was used to first cure the green second stage compound according to the previously determined t₉₅ time @ 145 °C and subsequently perform a temperature sweep on the cured compound ranging from 30 °C to 120 °C. The measurement is carried out at a frequency of 1 Hz and a strain of 5 %. The determined tan delta @ 70 °C obtained from this measurement reflects the aforementioned damping at 70 °C.

### High molecular weight polymer A

High cis polybutadiene was prepared in solution as known by the art.

The composition was determined to 97.5% 1.4 cis, 2.1% trans 1.4 and 0.4% 1.2 Vinyl bondings. The investigation with DSC showed a glass transition temperature of -104°C, a TccP: -67.1 and a TmP of -8.8°C.

The molecular weight was determined to Mn_PS 400692 g/mol and Mw as PS equivalents 866610 g/mol. The Mooney viscosity ML1+4 (100°C) of this rubber was analyzed to 96.4 MU.

### Low molecular weight polymer B

4823,86 g cyclohexane, 2,4 g 2,2-ditetrahydrofurylether (DTHFP, polar agent) and 81,73 g n-butyllithium (3.1377 mmol/g) were charged to a 10 1 reactor, heated up to 40°C. 1026 g Butadiene corresponding to a target molecular weight of 4 kg/mol were charged during 30 minutes to the reactor. The temperature of the polymerization mixture rose due to the polymerization heat to 75°C within 45 minutes. The living polymer chains were terminated with methanol(molar ratio 2 mol/ mol active initiator) and stabilized by addition of 0.25 phr of 4,6-bis(octylthiomethyl)-o-cresol sold under the tradename IRGANOX 1520. No functionalization of the polymer chains was done. The molecular weight was determined as polystyrene equivalents to M_{w} 7410 g/mol. The composition was determined to 33.6% 1.2- and 66.4% 1.4-content. The T_{g} was found to be -77.7°C.

### Low molecular weight polymer C

The polymer was produced, as described for polymer B with the exception that the modifying compound (A), (MeO)2(Me)Si-(CH2)3-S-SiMe2C(Me)3, was charged in a molar ratio to active initiator of 1,35 mol/mol were used. The molecular weight was determined as polystyrene equivalents to M_{w} 8429 g/mol. The composition was determined to 33.6% 1.2- and 66.4% 1.4-content. The T_{g} was found to be -77.4°C.

### Low molecular weight polymer D

4389,7 g cyclohexane, and 98,99 g n-butyllithium (3.1377 mmol/g) were charged to a 10 1 reactor and heated up to 60°C. 942 g Butadiene were charged during 30 minutes to the reactor. The temperature of the polymerization mixture rose due to the polymerization heat to 85°C within 40 minutes. The living polymer chains were terminated with modifying compound (A) in a molar ratio of 2.6 mol/ mol active initiator and the reaction allowed to proceed for 60 minutes. The reaction product was stabilized by addition of 0.25 phr of 4,6-bis(octylthiomethyl)-o-cresol sold under the tradename IRGANOX 1520. The molecular weight was determined as polystyrene equivalents to M_{w} 8347 g/mol. The composition was determined to 9% 1.2- and 81% 1.4-content. The T_{g} was found to be - 94.3°C.

### Low molecular weight polymer E

The polymer was produced, as described for polymer C with the exceptions that 4750 g cyclohexane, 9.37 g 2,2-ditetrahydrofurylether, 80,4 g n-butyllithium and the modifying compound (A) in a molar ratio to active initiator of 1,2 mol/mol were used.

The molecular weight was determined as polystyrene equivalents to M_{w} 7639 g/mol. The composition was determined to 66.1% 1.2- and 33,9% 1.4-content. The T_{g} was found to be -48.9°C.

### Low molecular weight polymer E

The polymer was produced, as described for polymer C with the exception that the butadiene was charged to the reaction within 60 minutes. The solvent was removed and the oil used without dilution.

The molecular weight was determined as polystyrene equivalents to M_{w} 9555 g/mol. The composition was determined to 26.6% 1.2- and 74.4% 1.4-content. The T_{g} was found to be -82°C.

### Preparation of polymer blends

Polymer blends according to the present invention were prepared using the polymer solutions, described above.

### Blend 1 (comparative C2)

Polymer solution of polymer A was mixed with TDAE oil to obtain a polymer consisting of 77 percent by weight polymer A and 23 percent by weight TDAE. The polymer was then recovered from the solution via steam stripping at 100°C and dried on a mill at 120° C for 5 minutes.

### Blend 2 (comparative C3)

The polymer solution of polymer B was mixed with the polymer solution of polymer A to obtain a polymer consisting of ratio 77 percent by weight polymer A and 23 percent by weight polymer B. The polymer was then recovered and dried as described for BR1.

### Blend 3 (Example 1)

The polymer solution of polymer C was mixed with the polymer solution of polymer A to obtain a polymer consisting of ratio 77 percent by weight polymer A and 23 percent by weight polymer C.

### Blend 4 (Example 2)

The polymer solution of polymer C was mixed with the polymer solution of polymer A to obtain a polymer consisting of ratio 83.3 percent by weight polymer A and 16.7 percent by weight polymer B.

### Blend 5 (Example 3)

The polymer solution of polymer C was mixed with the polymer solution of polymer A and TDAE oil to obtain a polymer consisting of 77 percent by weight of polymer A, 16.7 percent by weight of polymer B and 6.4 percent by weight of TDAE.

### Blend 6 (Example 4)

The polymer solution of polymer D was mixed with the polymer solution of polymer A to obtain a polymer consisting of ratio 77 percent by weight polymer A and 23 percent by weight polymer D.

### Blend 7 (Example 5)

The polymer solution of polymer E was mixed with the polymer solution of polymer A to obtain a polymer consisting of ratio 77 percent by weight polymer A and 23 percent by weight polymer E.

### Blend 8 (Example 6)

The low molecular weight oil E was mixed with the polymer solution of polymer A to obtain a polymer consisting of ratio 77 percent by weight polymer A and 23 percent by weight polymer E.

The polymers were compounded by kneading according to the formulations shown in table 1 in a standard two- step compound recipe with silica as filler in an internal lab mixer comprising Banbury rotor type with a total chamber volume of 370 cm³. The first mixing step was performed with a filling degree of 72% using an initial temperature of 50 °C. After adding the rubber, the filler and all other ingredients described in the formulations for step 1, the rotor speed of the internal mixer is controlled to reach a temperature range between 145 - 160 °C for up to 4 minutes, so that silanization reaction can occur. The total mixing time for the first step is 7 min. After dumping the compound the mixture is cooled down and stored for relaxing before adding the curing system in the second mixing step. The second mixing step was done in the same equipment by using a fill factor of 69% at an initial temperature of 50 °C. The compound from first mixing step, sulphur, DPG and TBBS were added and mixed for a total time of 3 min. All amounts are given in gramm.

Compound version 1 was used for the comparative examples C2, C3 and the inventive examples E1, E3, E4 , E5 and the corresponding blends , Compound version 2 for the example E2, Compound version 3 for the comparative example C1.

**Table 1: Compound formulations**

| Compound version | 1 | 2 | 3 |
|---|---|---|---|
| **1. Mixing step** | | | |
| **5D05-X7** (1) | **90** | **90** | **90** |
| **Blend (InSitu or Solution blend)** | **78** | **72** | |
| **Nd-HCBR** | | | **60** |
| ²/₃ **Ultrasil 7000GR (2)** | 90 | 90 | 90 |
| **⅓ Ultrasil 7000GR (2)** | 30 | 30 | 30 |
| Silan **Si75 (3)** | **10,35** | **10,35** | **10,35** |
| **Stearic acid (4)** | **1,50** | **1,50** | **1,50** |
| **Dusantox** 6 PPD (5) | **3,00** | **3,00** | **3,00** |
| **Zinkoxide** (6) | **3,75** | **3,75** | **3,75** |
| **Antilux 654 (7)** | **2,25** | **2,25** | **2,25** |
| TDAE **Vivatec 500** | **12,00** | **18** | 30 |
| Low molecular weight polymer | | | |
| **Sum** | **320,85** | **320,85** | **320,85** |
| | | | |

| **2. Mixing step** | | | |
|---|---|---|---|
| **Batch 1. Mixing step** | **302,00** | **302,00** | **302,00** |
| **Sulfur (8)** | **2,21** | **2,13** | **1,98** |
| **TBBS (9)** | **2,37** | **2,29** | **2,12** |
| **Ekaland DPG-PD (10)** | **2,37** | **2,29** | **2,12** |
| **Sum** | **308,95** | **308,95** | **308,95** |

| | | | |
|---|---|---|---|
| ¹ Trinseo Deutschland GmbH; ² Evonik Industries AG ³ Bis(triethoxysilylpropyl)disulfan, sulfur equivalents per molecule: 2.35; Evonic Industries AG; ⁴ Cognis GmbH; ⁵ Grillo-Zinkoxid GmbH; ⁶ N-(1,3-dimethylbutyl)-N'-phenyl-1,4-benzenediamine, Duslo, a.s.; ⁷ Light & ozone protective wax, Rhein Chemie Rheinau GmbH 8 Solvay AG; 9 N-*tert*-butyl-2-benzothiazole-sulfeneamide, Lanxess AG 10 diphenylguanidine (powder) | | | |

### Results:

The comparison of the test results in a silica compound are given in the following table.

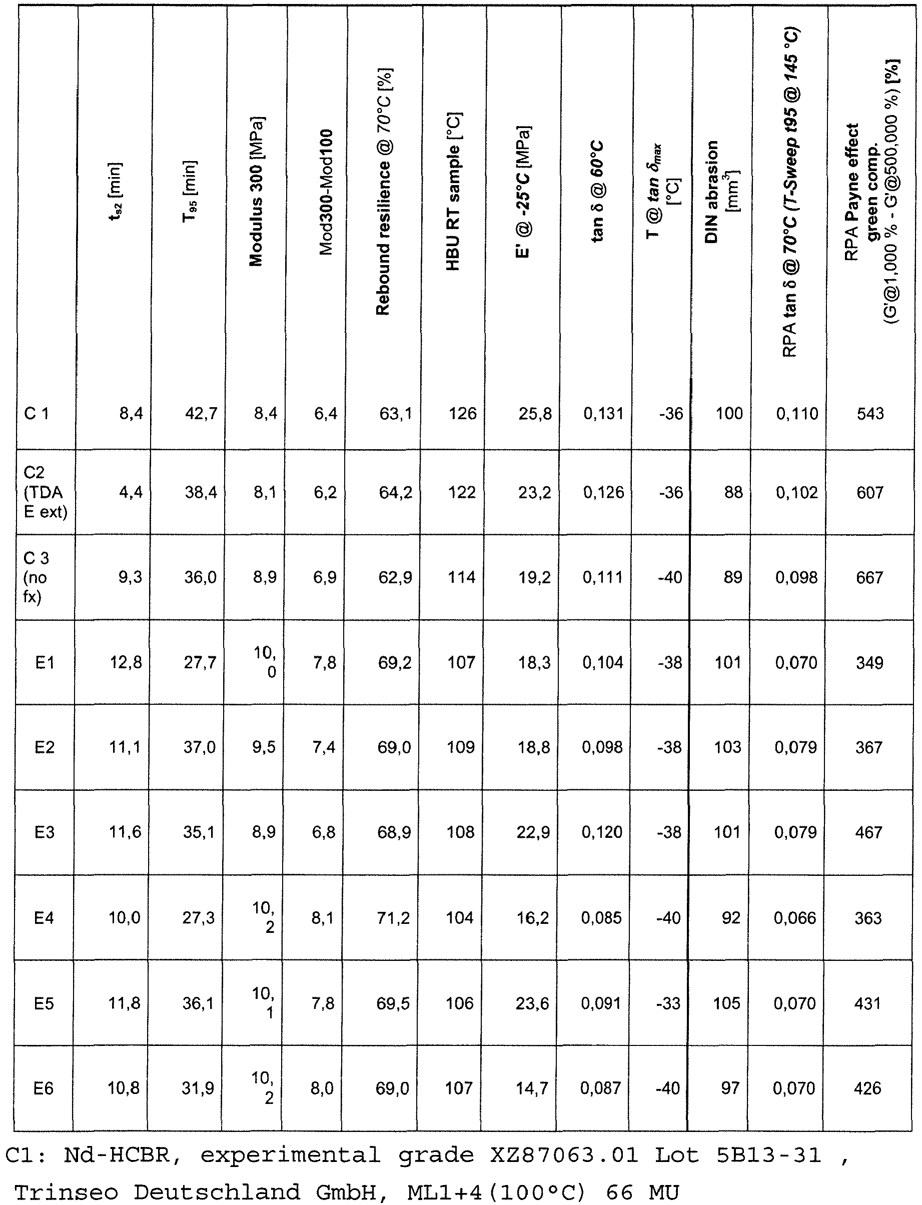

The inventive functionalized blends (E1-E6) show an improvement of the lab predictors for rolling resistance, particularly a reduced tan d @60°C (DMA), a lower HBU, higher Rebound at 70°C, a lower tan δ at 70°C measured using a RPA. Furthermore higher values of Modulus 300 and lower values of the measured Payne-effect indicate an improved polymer-filler interaction, which also indicates a potential for rolling resistance improvement.

Furthermore, the scorch time ts2 is significantly improved (longer) which results in a broader processing window and in more degrees of freedom for processing of the tire compound without the risk of scorching and derived defects in the network.

The inventive blends show furthermore improved lab predictors for winter performance (lower stiffness E' at - 25°C) and higher reinforcement (modul M300, and M300-M100 values) at comparable DIN abrasion versus the comparisons.

## Claims

1. Polymer blend comprising
(A) 65 to 96 percent by weight of a first polymer, preferably having a molecular weight distribution (Mw/Mn) of less than 3, wherein the first polymer is a diene polymer having a weight average molecular weight (Mw) of from 500.000 to 3.000.000 g/mol derived from butadiene monomers and, optionally, further conjugated diene monomers, wherein 85 % by weight or more of the butadiene monomers are incorporated into the polymer chains in the form of the cis isomer;
(B) 4 to 35 percent by weight of a second polymer having a weight average molecular weight (Mw) of 500 to 100.000 g/mol, wherein the second polymer is obtainable by
(i) anionic polymerization in the presence of a polymerization initiator in an organic solvent of (i-1) at least one conjugated diene monomer, or (i-2) at least one conjugated diene monomer and one or more α-olefin monomer(s), or (i-3) at least one or more α-olefin monomer(s), and
(ii) modification of the polymer chain ends obtained in (i) by addition and reaction of at least one compound represented by any of formula (1), formula (3), or formula (11) to (18), as defined below,
wherein the amounts of the first polymer (A) and the second polymer (B) are based on the total weight of the first and the second polymers (A) and (B) :
(R***O)_{X}(R**)_{y}Si-A-S-SiR**₃ formula (1),
wherein each of R** is independently selected from C₁-C₁₆ alkyl or alkylaryl; R*** is independently selected from C₁-C₄ alkyl; A is selected from C₆-C₁₈ aryl, C₇-C₅₀ alkylaryl, C₁-C₅₀ alkyl and C₂-C₅₀ dialkylether; and optionally R**, R***, or A may independently be substituted with one or more groups, selected from C₁-C₄ alkyl, C₁-C₄ alkoxy, C₆-C₁₂ aryl, C₇-C₁₆ alkylaryl, di (C₁-C₇ hydrocarbyl)amino, bis(tri(C₁-C₁₂ alkyl)silyl)amino, tris(C₁-C₇ hydrocarbyl)silyl and C₁-C₁₂ thioalkyl; x is an integer selected from 1, 2 and 3; y is an integer selected from 0, 1 and 2; provided that x + y = 3;
(R_{I}O)ₓ₁, (R_{II})_{y1},Si-R_{IV}-S-E formula (3),
wherein R_{I} and R_{II} are independently selected from C₁-C₈ alkyl; x1' is an integer selected from 1, 2 and 3; yl' is an integer selected from 0, 1 and 2;
R_{IV} is selected from C₁-C₈ alkyl; and E is R_{V} or of formula (3a): 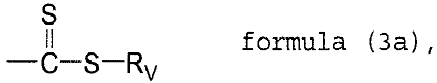 wherein R_{V} is C₁-C₆ alkyl, C₆-C₁₂ aryl, C₇-C₁₆ alkylaryl, or C₇-C₁₆ arylalkyl; 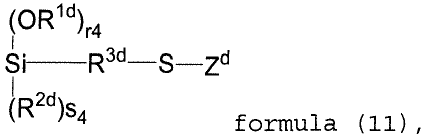 wherein each R^{1d} is independently selected from (C₁-C₁₆) alkyl; each R^{2d} is independently selected from (C₁-C₁₆) alkyl, (C₆-C₁₈) aryl and (C₇-C₁₈) aralkyl; R^{3d} is independently selected from divalent (C₁-C₁₆) alkyl, divalent (C₆-C₁₈) aryl, divalent (C₇-C₁₈) aralkyl and -R^{4d}-O-R^{5d}-, wherein R^{4d} and R^{5d} are independently selected from divalent (C₁-C₆) alkyl; and Z^{d} is independently selected from (C₁-C₁₆) alkyl, (C₆-C₁₈) aryl, (C₇-C₁₈) aralkyl, (C=S)-S-R^{6d}, wherein R^{6d} is selected from (C₁-C₁₆) alkyl, (C₆-C₁₈) aryl and (C₇-C₁₈) aralkyl, and -M^{1d}(R^{7d})_{c4}(R^{8d})_{d4}, wherein M^{1d} is silicon or tin, each R^{7d} is independently selected from (C₁-C₁₆) alkyl, (C₆-C₁₈) aryl and (C₇-C₁₈) aralkyl; each R^{8d} is independently selected from-S-R^{3d}-Si(OR^{1d})ᵣ₄(R^{2d})ₛ₄, wherein R^{1d}, R^{2d} and R^{3d} are as defined above, r₄ is an integer independently selected from 1, 2 and 3 and s₄ is an integer independently selected from 0, 1 and 2, with r₄ + s₄ = 3; c₄ is an integer independently selected from 2 and 3; d₄ is an integer independently selected from 0 and 1; and c₄ + d₄ = 3; 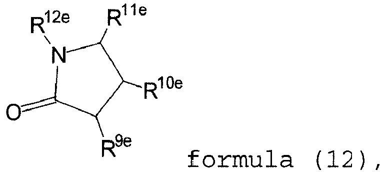 wherein R^{9e}, R^{10e}, R^{11e} and R^{12e} are independently selected from hydrogen, (C₁-C₁₆) alkyl, (C₆-C₁₆) aryl and (C₇-C₁₆) aralkyl, preferably N-methyl-pyrrolidon; 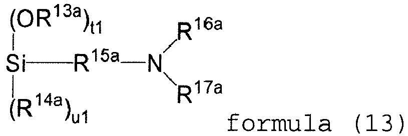 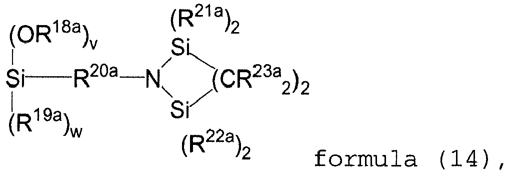 wherein each R^{13a}, R^{14a}, R^{18a} and R^{19a} is independently selected from (C₁-C₁₆) alkyl; R^{15a} and R^{20a} are independently selected from divalent (C₁-C₁₆) alkyl, divalent (C₆-C₁₈) aryl, divalent (C₇-C₁₈) aralkyl and -R^{24a}-O-R^{25a}-, wherein R^{24a} and R^{25a} are independently selected from divalent (C₁-C₆) alkyl; R^{16a} and R^{17a} are independently selected from (C₁-C₁₆) alkyl and -SiR^{26a}R^{27a}R^{28a}, wherein R^{26a}, R^{27a} and R^{28a} are independently selected from (C₁-C₁₆) alkyl, (C₆-C₁₈) aryl and (C₇-C₁₈) alkylaryl, or R16a and R17a together form a ring system, the ring system optionally comprising additionally O, S or N as ring forming atoms, each of R16a and R17a being a divalent (C1-C16) alkylene group; each R^{21a} and R^{22a} is independently selected from (C₁-C₁₆) alkyl, (C₆-C₁₈) aryl and (C₇-C₁₈) alkylaryl; each R^{23a} is independently selected from hydrogen and (C₁-C₆) alkyl; t₁ and v are integers independently selected from 1, 2 and 3; u₁ and w are integers independently selected from 0, 1 and 2; t₁ + u₁ = 3; and v + w = 3; 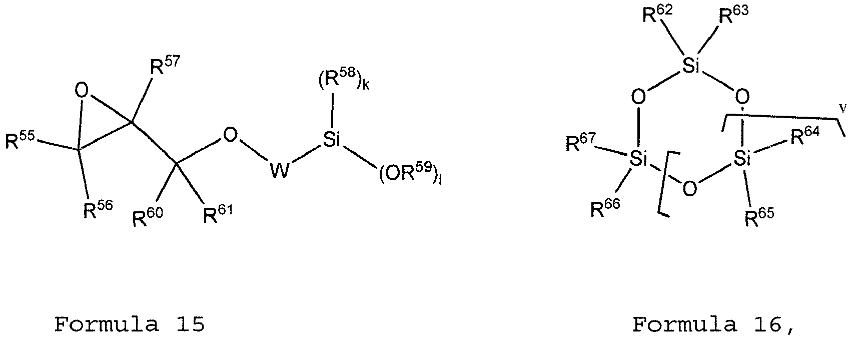 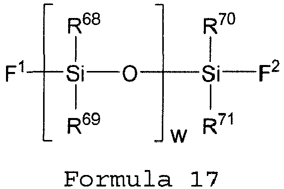
wherein R⁵⁵, R⁵⁶, R⁵⁷, R⁵⁸, R⁶⁰, R⁶¹, R⁶², R⁶³, R⁶⁴, R⁶⁵, R⁶⁶, R⁶⁷, R⁶⁸, R⁶⁹, R⁷⁰ and R⁷¹ are each independently selected from hydrogen, (C₁-C₁₆) alkyl, (C₆-C₁₆) aryl and (C₇-C₁₆) alkylaryl; R⁵⁹ is selected from (C₁-C₄) alkyl, (C₆-C₁₈) aryl and (C₇-C₁₈) alkylaryl;
W is at least divalent and is selected from (C₆-C₁₈) aryl, (C₇-C₁₈) alkylaryl and (C₁-C₁₈) alkyl, wherein each group is optionally substituted with one or more groups selected from di(C₁-C₇ hydrocarbyl) amino, bis (tri (C₁-C₁₂ alkyl) silyl) amino, tris(C₁-C₇ hydrocarbyl)silyl, (C₇-C₁₈) alkylaryl and (C₆-C₁₈) aryl;
k is selected from 0, 1 and 2; 1 is selected from 1, 2 and 3; k+1=3; and v is selected from 1 to 20;
F¹ and F² are independently selected from hydrogen, hydroxy, chlorine, bromine, iodine; -SiR⁵²R⁵³R⁵⁴, wherein R⁵², R⁵³, R⁵⁴ are the same or different and independently selected from C₁-C₁₆ alkyl or C₇-C₁₆ alkylaryl; vinyl, (C₆-C₁₆) aryl, (C₇-C₁₆) alkylaryl and (C₁-C₁₆) alkyl, wherein each hydrocarbyl group is optionally substituted with one or more groups selected from hydroxyl, di(C₁-C₇ hydrocarbyl) amino, bis (tri (C₁-C₁₂ alkyl)silyl)amino and an epoxy group and;
(R⁸⁰O)y(R⁸¹)z Si Formula 18
R⁸⁰ is independently selected from methyl, ethyl, iso-propyl, n-propyl, n-butyl, iso-butyl, or tert-butyl; R⁸¹ is independently selected from C₁-C₆ alkyl, C₆-C₁₂ aryl, or C₇-C₁₀ aralkyl; y is an integer independently selected from 2, 3 and 4; z is an integer independently selected from 0, 1 and 2; y + z = 4.

2. Polymer blend according to claim 1, wherein the first polymer is obtainable by a process comprising the following steps in this order:
I) Polymerizing one or more diene monomers in the presence of a catalyst composition to give a reaction mixture; wherein the catalyst composition comprises one or more of a carboxylate, an alkyl phosphate, an alkyl phosphite, an alcoholate, an amide and a hydrocarbyl compound of a rare earth element having an atomic number of 57 to 71 in the periodic table, and at least one activator compound, or a reaction product of the at least one activator compound and the carboxylate, alkyl phosphate, alkyl phosphite, alcoholate, amide and/or hydrocarbyl compound of the rare earth element;
II) optionally adding to the reaction mixture one or more alkoxysilane compounds selected from the compounds represented by the following formulae (A1), (A2), (A3), (A4) and (A5):
((R¹O)_{q}(R²)ᵣSi)ₛ (A1)
wherein in formula (A1): Si is silicon and O is oxygen;
s is an integer selected from 1 and 2;
with the proviso that if s is 1, then q is an integer selected from 2, 3 and 4; r is an integer selected from 0, 1 and 2; and q + r = 4;
and if s is 2, then q is an integer selected from 1, 2 and 3; r is an integer selected from 0, 1 and 2; and q + r = 3;
((R³O)ₜ(R⁴)ᵤSi)₂O (A2)
wherein in formula (A2): Si and O are as defined above;
t is an integer selected from 1, 2 and 3;
u is an integer selected from 0, 1 and 2;
and t + u = 3;
(R⁵O)_{w}(R⁶)ₓSi-R⁷-S-SiR⁸₃ (A3)
wherein in formula (A3): Si and O are as defined above, and S is sulfur;
w is an integer selected from 2 and 3;
x is an integer selected from 0 and 1;
and w + x = 3;
(R⁹O)_{y}(R¹⁰)_{z}Si-R¹¹-N(SiR¹²₃)₂ (A4)
wherein in formula (A4): Si and O are as defined above, and N is nitrogen;
y is an integer selected from 2 and 3;
z is an integer selected from 0 and 1;
and y + z = 3;
(Si(OR¹³)₃)₂(Si(OR¹⁴)₂)ₚ (A5)
wherein in formula (A5): Si and O are as defined above;
p is an integer selected from 1 to 10;
and wherein R1, R2, R3, R4, R5, R6, R8, R9, R10, R12, R13 and R14 in the above formulae (A1) to (A5) independently are selected from: (C6-C21) aryl, (C7-C22) alkylaryl and (C1-C16) alkyl; and
R7 and R11 in formulae (A3) and (A4) independently are a divalent (C6-C21) aryl group, a divalent (C7-C22) alkylaryl group, or a divalent (C1-C16) alkylen group;
III) optionally adding S₂Cl₂, SCl₂, SOCl₂, S₂Br₂, SOBr₂ or a mixture thereof to the reaction mixture; and
IV) optionally adding a protic agent to the reaction mixture so as to deactivate the catalyst.

3. The polymer blend according to claim 1 or 2, wherein the modification (ii) for the second polymer (B) is carried out by addition and reaction of at least one compound represented by any of formula (1), (3), (11)and (18).

4. The polymer blend according to any of the preceding claims, wherein the polymerization initiator for the preparation of the second polymer (B) is selected from the group consisting of n-BuLi, sec-BuLi, tert-BuLi, 1,3-bis(3-lithioprop-1-en-2-yl)benzene, a compound represented by the following formula (6) to formula (10), as defined below, or Lewis base adducts thereof, and/or mixtures thereof: 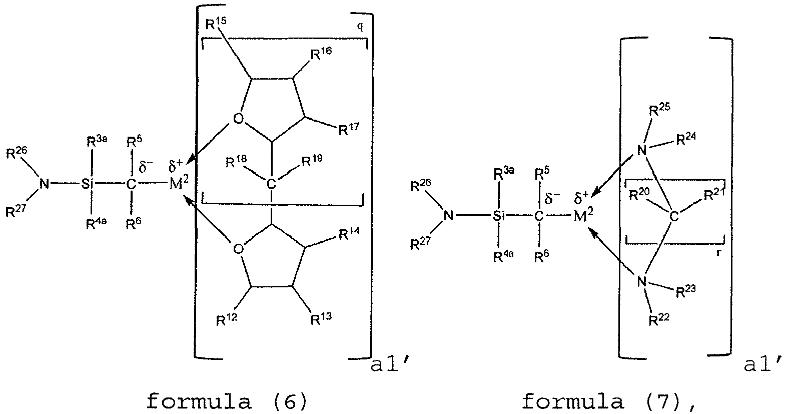 wherein R^{3a} is independently selected from -N(R²⁸)R²⁹, C₁-C₁₈ alkyl, C₆-C₁₈ aryl and (C₇-C₁₈) aralkyl; R^{4a} is independently selected from -N(R^{30a})R^{31a}, (C₁-C₁₈) alkyl, (C₆-C₁₈) aryl and (C₇-C₁₈) aralkyl; R⁵ and R⁶ are each independently selected from hydrogen, C₁-C₁₈ alkyl, C₆-C₁₈ aryl and C₇-C₁₈ aralkyl; M² is lithium; R¹², R¹³, R¹⁴, R¹⁵, R¹⁶, R¹⁷, R¹⁸, R¹⁹, R²⁰, R²¹, R²², R²³, R²⁴ and R²⁵ are each independently selected from hydrogen, C₁-C₁₈ alkyl, C₆-C₁₈ aryl and C₇-C₁₈ aralkyl; R²⁶, R²⁷, R²⁸, R²⁹, R^{30a} and R^{31a} are each independently selected from C₁-C₁₈ alkyl, C₆-C₁₈ aryl and C₇-C₁₈ aralkyl; q is selected from an integer of 1, 2, 3, 4 and 5; r is selected from an integer of 1, 2 and 3; and a1' is selected from an integer of 0 or 1; preferably a1' is 1; 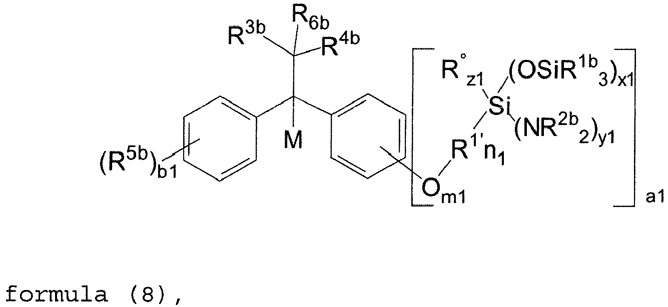 wherein each R° is independently selected from C₁-C₆ alkyl, C₂-C₆ alkenyl, C₇-C₁₀ alkylaryl and C₆-C₁₀ aryl, preferably independently selected from C₁-C₄ alkyl, C₇ alkylaryl and C₆ aryl; R^{1'} is an optionally substituted methylene group; each R^{1b} is independently selected from C₁-C₁₀ alkyl, C₇-C₁₀ alkylaryl and C₆-C₁₀ aryl, preferably independently selected from C₁-C₆ alkyl and C₆-C₁₀ aryl; each R^{2b} is independently selected from C₁-C₁₀ alkyl, C₇-C₁₀ alkylaryl and C₆-C₁₀ aryl, preferably independently selected from C₁-C₈ alkyl and C₇-C₈ alkylaryl, wherein the R^{2b} groups may be connected to each other to form a ring together with the Si-bonded nitrogen atom; R^{3b} and R^{4b} are each independently selected from hydrogen, methyl, ethyl, propyl, butyl and vinyl; each R^{5b} is independently selected from C₁-C₅ alkyl, C₇ C₁₂ alkylaryl and C₆-C₁₂ aryl, preferably independently selected from C₁-C₅ alkyl, C₇ alkylaryl and C₆ aryl, more preferably independently selected from C₁-C₅ alkyl; R^{6b} is selected from C₁-C₆ alkyl, phenyl and benzyl; M is lithium; a₁ ≥ 1; b1 ≥ 0; a₁ + b1 ≤ 10; m₁ = 0 or 1; n₁ = 0 to 12; x₁ = 0, 1 or 2; y₁ = 1, 2 or 3; z₁ = 0, 1 or 2; x₁ + y₁ + z₁ = 3; or x₁ + y₁ + z₁ = 2 when the silicon atom of the aminosilyl group is bonded twice to the benzene rings via groups R^{1'} or single bonds; provided that when m₁ = 1, then n₁ = 1 to 12, and when m₁ = 0, then n₁ = 0 and x₁ = 1 or 2; wherein the aminosilyl group(s) may be bonded to any of the two benzene rings, plural aminosilyl groups may be different from each other, and the R^{5b} group(s) may be bonded to any of the two benzene rings; 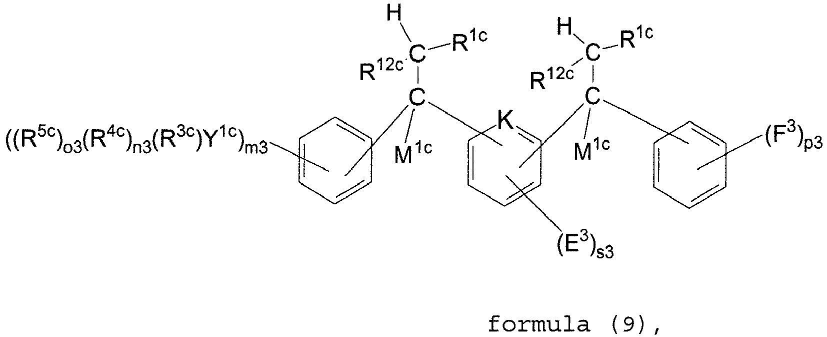 wherein each M^{1c} is lithium; each R^{1c} is independently selected from C₁-C₁₀₀ alkyl and C₂-C₁₀₀ alkenyl, optionally substituted with one or more C₆-C₁₂ aryl groups and optionally linked to the carbon atom C by up to 25 monomer units selected from conjugated diene monomers and aromatic vinyl compounds, especially butadiene, isoprene and styrene; each R^{12c} is independently selected from hydrogen, (C₁-C₁₀) alkyl, (C₆-C₁₂) aryl and (C₇-C₁₈) alkylaryl; each Y^{1c} is independently selected from a carbon atom, nitrogen atom, a sulfur atom and a silicon atom; R^{3c}, R^{4c} and R^{5c} are each independently selected from (C₁-C₁₈) alkyl, di(C₁-C₆) alkyl amine (only when Y^{1c} is selected from a carbon and silicon atom), (C₆-C₁₈) aryl, (C₇-C₁₈) alkylaryl and, when Y^{1c} is not a silicon atom, -SiR^{14c}R^{15c}R^{16c}, wherein R^{14c}, R^{15c} and R^{16c} are each independently selected from (C₁-C₁₈) alkyl, (C₆-C₁₈) aryl and (C₇-C₁₈) alkylaryl; n₃ and o₃ are each an integer selected from 0 and 1; and n₃+o₃=1 when Y^{1c}=N, n₃=o₃=0 when Y^{1c}=S, and n₃+o₃=2 when Y^{1c}=Si, C; m₃ is an integer selected from 0, 1, 2 and 3; K is selected from nitrogen and >C-H; each E³ is independently selected from (C₁-C₁₈) alkyl, (C₆-C₁₈) aryl, (C₇-C₁₈) alkylaryl, and -Y^{3c}(R^{9c})(R^{10c})ₜ₃(R^{11c})ᵤ₃, wherein Y^{3c} is selected from a nitrogen atom, a sulfur atom, a carbon atom and a silicon atom; R^{9c}, R^{10c} and R^{11c} are each independently selected from (C₁-C₁₈) alkyl, di(C₁-C₆) alkyl amine (only when Y^{3c} is selected from a carbon and a silicon atom), (C₆-C₁₈) aryl, (C₇-C₁₈) alkylaryl, and, when Y^{3c} is not a silicon atom, -SiR^{20c}R^{21c}R^{22c}, wherein R^{20c}, R^{21c} and R^{22c} are each independently selected from (C₁-C₁₈) alkyl, (C₆-C₁₈) aryl and (C₇-C₁₈) alkylaryl; t₃ and u₃ are each an integer selected from 0 and 1; and t₃+u₃=1 when Y^{3c}=N, t₃=u₃=0 when Y^{3c}=S, and t₃+u₃=2 when Y^{3c}=Si, C; s₃ is an integer selected from 0, 1 and 2; each F³ is independently selected from (C₁-C₁₈) alkyl, (C₆-C₁₈) aryl, (C₇-C₁₈) alkylaryl,
and -Y^{2c}(R^{6c})(R^{7c})_{q3}(R^{8c})ᵣ₃, wherein Y^{2C} is selected from a nitrogen atom, a sulfur atom, a carbon atom and a silicon atom; R^{6c}, R^{7c} and R^{8c} are each independently selected from (C₁-C₁₈) alkyl, di(C₁-C₆) alkyl amine (only when Y^{2C} is selected from a carbon and a silicon atom), (C₆-C₁₈) aryl, (C₇-C₁₈) alkylaryl and, when Y^{2c} is not a silicon atom, -SiR^{17c}R^{18c}R^{19c}, wherein R^{17c}, R^{18c} and R^{19c} are each independently selected from (C₁-C₁₈) alkyl, (C₆-C₁₈) aryl and (C₇-C₁₈) alkylaryl; q₃ and r₃ are each an integer selected from 0 and 1; and q₃+r₃=1 when Y^{2c}=N, q₃= q₃=r₃=0 when Y^{2c}=S, and q₃+r₃=2 when Y^{2c}=Si,C; p₃ is an integer selected from 0, 1, 2 and 3; 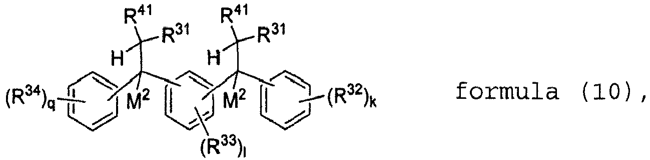 wherein each R³¹ is independently selected from hydrogen, (C₁-C₁₀) alkyl, (C₆-C₁₂) aryl and (C₇-C₁₈) aralkyl; each R³², R³³ and R³⁴ is independently selected from hydrogen, (C₁-C₁₈) alkyl and (C₁-C₁₈) alkoxy; each R⁴¹ is independently selected from (C₁-C₁₀₀) alkyl and (C₂-C₁₀₀) alkenyl, wherein each R⁴¹ is optionally substituted with one to three (C₆-C₁₂) aryl groups and is optionally bonded to the skeleton of formula (10 via an oligomer chain composed of up to 25 monomer units selected from conjugated dienes, especially 1,3-butadiene and isoprene, and aromatic vinyl compounds, especially styrene and divinylbenzene; M² is lithium; and k, 1 and q are integers independently selected from 0, 1, 2 and 3.

5. The polymer blend according to any of the preceding claims, wherein
(5.a) the conjugated diene monomer is selected from 1,3-butadiene, 2-alkyl-1,3-butadiene, 2-methyl-1,3-butadiene, 2,3-dimethyl-1,3-butadiene, 1,3-pentadiene, 2,4-hexadiene, 1,3-hexadiene, 1,3-heptadiene, 1,3-octadiene, 2-methyl-2,4-pentadiene, cyclopentadiene, 2,4-hexadiene and/or 1,3-cyclooctadiene, preferably 1,3-butadiene, and/or 2-methyl-1,3-butadiene; and/or
(5.b) the α-olefin monomer is selected from styrene, 2-methylstyrene, 3-methylstyrene, 4-methylstyrene, 2,4-dimethylstyrene, 2,4,6-trimethylstyrene, α-methylstyrene, stilbene, 2,4-diisopropylstyrene,4-tert-butylstyrene, vinyl benzyl dimethylamine, (4-vinylbenzyl)dimethyl aminoethyl ether, N,N-dimethylaminoethyl styrene, N,N-bis-(trialkylsilyl)aminostyrene, tert-butoxystyrene, vinylpyridine, divinylbenzene, a vinylsilane compound of the following formula (4) or formula (5), and/or mixtures thereof; preferably styrene, α-methylstyrene, and/or divinylbenzene; 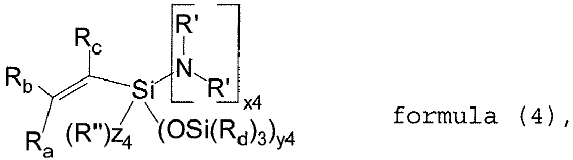 wherein R_{d} is independently selected from C₁-C₁₈ hydrocarbyl; R" is selected from C₁-C₆ hydrocarbyl; Rₐ, R_{b} and R_{c} are independently selected from hydrogen, methyl, ethyl and vinyl; x4 is independently an integer selected from 1 and 2; y4 is independently an integer selected from 0, 1 and 2, z4 is an integer selected from 0, 1 and 2; and x4+y4+z4=3; R' is independently selected from C₁-C₁₂ alkyl, C₂-C₁₂ alkenyl, C₆-C₁₈ aryl, C₇-C₁₈ alkylaryl, and tri(C₁-C₆ alkyl, C₆-C₁₂ aryl or C₇-C₁₈ (alkylaryl)silyl, wherein the two R' groups may be connected to form a ring and the ring may contain, further to the Si-bonded nitrogen atom, one or more of an oxygen atom, a nitrogen atom, an >N(C₁-C₆ alkyl) group and a sulfur atom; and one R' may be - Si(CR_{c}=CRₐR_{b})(OSiR₃)_{y4}(R")_{z4}, wherein Rₐ, R_{b}, R_{c}, R, R", y4 and z4 are independently as defined above and y4+z4=2;
(A¹)-Bₙ₁ formula (5),
wherein A¹ is an organic group having at least two amino groups; each B is independently selected from a group -Si(R⁵¹)(R⁵²)(R⁵³), wherein R⁵¹, R⁵² and R⁵³ are each independently selected from vinyl, butadienyl, methyl, ethyl, propyl, butyl and phenyl, provided that at least one of R⁵¹, R^{S2} and R⁵³ is selected from vinyl and butadienyl, wherein each group B is a substituent of an amino group of group A¹, at least two of the amino groups of group A¹ are each substituted with at least one group B; and n₁ is an integer of at least 2, preferably an integer selected from 2 to 6; and all amino groups in group A¹ are tertiary amino groups; or
(5.d) the second polymer (B) obtained in step (I) is an elastomeric polymer, preferably a butadiene-polymer or a styrene-butadiene-polymer.

6. The polymer blend according to any of the preceding claims, wherein
(6.a) in formula (1), formula (3), formula (11), formula (13), formula (14), formula (15) and formula (18) R***, R_{I}, R^{1d}, R^{13a}, R^{18a}, R⁵⁹, R⁸⁰, R**, R_{II}, R^{2d}, R^{14a}, R^{19a}, R⁵⁸ and R⁸¹ are independently selected from methyl, ethyl, iso-propyl, n-propyl, n-butyl, iso-butyl, or tert-butyl; preferably from methyl and ethyl.
(6.b) in formula (1), each of R*** are independently selected from methyl, ethyl, iso-propyl, n-propyl, n-butyl, iso-butyl, or tert-butyl; each of R** are independently selected from C₁-C₆ alkyl, C₆-C₁₂ aryl, or C₇-C₁₀ aralkyl; and A is -(CH₂)_{N}-, wherein N is an integer selected from 1, 2, 3, 4, 5 or 6; and/or
(6.c) in formula (3), each of R_{I} and R_{II} are independently C₁-C₄ alkyl; R_{IV} is selected from C₁-C₄ alkyl; y1' is an integer selected from 0 and 1; and E is of formula (3a).

7. The polymer blend according to any of claims 2 to 6, wherein groups R1, R2, R3, R4, R5, R6, R8, R9, R10, R12, R13 and R14 in formulae (A1) to (A5) independently from each other are C₁₋₈ alkyl groups.

8. The polymer blend according to any of claims 2 to 7, wherein groups R1, R3, R5, R9, R13 and R14 in formulae (A1) to (A5) independently from each other are C₁₋₄ alkyl groups, preferably methyl or ethyl.

9. The polymer blend according to any of claims 2 to 8, wherein the rare earth element is one or more of lanthanum, praseodymium, cerium, neodymium, gadolinium and dysprosium, preferably neodymium.

10. The polymer blend according to any of claims 2 to 9, wherein the catalyst composition comprises neodymium carboxylate, preferably neodymium versatate, neodymium neodecanoate, or both.

11. The polymer blend according to any of claims 2 to 10, wherein the activator compound comprises dialkylaluminum hydride according to general formula (A6) and a Lewis acid:
R¹⁵₂AlH (A6)
wherein both groups R¹⁵ in formula (A6) independently from each other are C₁₋₁₀ alkyl groups.

12. The polymer blend according to any of claims 2 to 11, wherein the Lewis acid is an alkyl aluminum chloride selected from alkyl aluminum sesquichloride, dialkyl aluminum chloride and alkyl aluminum dichloride.

13. The polymer blend according to any of claims 2 to 12, wherein S₂Cl₂, SCl₂, SOCl₂, S₂Br₂, SOBr₂ or the mixture thereof is added in an amount of less than 0.05 parts by weight based on 100 parts by weight of diene polymer.

14. The polymer blend according to any of claims 2 to 13, wherein the one or more alkoxysilane compounds are selected from the compounds represented by formulae (A1), (A2), (A3) and (A4).

15. The polymer blend according to any of claims 2 to 14, wherein the one or more alkoxysilane compounds are selected from the compounds represented by formulae (A1) and (A3).

16. The polymer blend according to any of claims 2 to 15, wherein the one or more alkoxysilane compounds are selected from (CH₃O)₄Si, ((CH₃O)₃Si)₂, (CH₃O₂(CH₃)Si-(CH₂)₃-S-Si(CH₃)₂C(CH₃)₃ and (CH₃O)₃Si-(CH₂)₃-S-Si(CH₃)₂C(CH₃)₃.

17. The polymer blend according to any of claims 2 to 15, wherein the first polymer comprises 94 % by weight or more of the butadiene monomers are incorporated into the polymer chains in the form of the cis-1,4-butadiene isomer and 0 to 2 % by weight of the butadiene monomers are incorporated into the polymer chains in the form of the 1,2-butadiene isomers.

18. A polymer composition, comprising the polymer blend according to any of claims 1 to 17.

19. The polymer composition according to claim 18, further comprising one or more filler(s) and optionally one or more vulcanizing agent(s).

20. A method for the preparation of a crosslinked elastomeric polymer, said method comprising the following steps:
(1) Providing the polymer blend according to any of claims 1 to 17 or the polymer composition according to claim 18;
(2) Adding one or more filler(s) and optionally one or more silane coupling agent(s); and compounding said mixture; and
(3) Adding one or more vulcanizing agent(s) and optionally one or more vulcanizing accelerator(s) to the mixture of step (2); and cross-linking said mixture.

21. A crosslinked elastomeric polymer obtainable according claim 20.

22. An article, comprising the polymer composition according to any of claims 17 to 18 or the crosslinked elastomeric polymer according to claim 21.

23. The article according to claim 22, wherein the article is a tire, a tire tread, a tire side wall, a conveyer belt, a seal or a hose.
